# EUROPEAN PATENT SPECIFICATION

(11) **EP 4 607 029 B1**
(45) Date of publication and mention of the grant of the patent: **08.04.2026**
(21) Application number: 25181015.6
(22) Date of filing: 05.07.2024
(51) Int. Cl.: F04B 53/00, A61C 17/028, A61C 17/34, A61C 17/02

(54) **ORAL CLEANING APPLIANCE**
MUNDREINIGUNGSVORRICHTUNG
APPAREIL DE NETTOYAGE BUCCAL

(30) Priority: 29.12.2023 CN 202311867128; 29.12.2023 CN 202311869907
(43) Date of publication of application: 27.08.2025
(62) Divisional of application: 24793724.6
(73) Proprietor: Shenzhen Soocas Technology Co., Ltd., Shenzhen, Guangdong 518000 (CN)
(72) Inventor: ZUO, Jie, Shenzhen, Guangdong, 518000 (CN); LI, Zhoujian, Shenzhen, Guangdong, 518000 (CN)
(74) Representative: Herrero & Asociados, S.L.

(56) References cited:
- US-A1- 2017 007 384
- US-A1- 2018 289 456
- US-A1- 2022 175 504

## Description

### TECHNICAL FIELD

The present disclosure relates to the technical field of oral cleaning appliance, and more particularly, to a fluid pumping unit and an oral cleaning appliance.

### BACKGROUND

As a commonly used oral care appliance, an oral irrigator essentially includes a nozzle and a handle, where the handle is internally provided with a pump body communicated with the nozzle, and a water tank communicated with the pump body. When in use, the pump body can pump water out of the water tank, a water flow is jointly pressurized through the pump body and an internal reducer pipe, and then the water flow is ejected from the nozzle, so the pressurized water can clean a user's teeth.

To ensure its cleaning power, the oral irrigator in the prior art uses a conventional pump body generally having a larger size and more water consumption. To meet requirements for water consumption of the pump body, it is required to increase a volume of the water tank, which leads to a larger size of the entire handle, thus reducing the user's using experience. In a conventional improvement method, to reduce the volume of the water tank on the basis of an unchanged volume of the pump body, although the size of the handle is reduced to a certain extent, water discharge of the nozzle may be affected, which may reduce the cleaning power and adversely affect cleaning effects. Therefore, the oral irrigator in the prior art cannot solve a contradiction between product size and the cleaning power.

US2018289456 discloses a dental cleaning appliance fluid delivery system which uses a pump-fed inlet and hydraulic accumulator, with a control circuit operating a valve between the accumulator and nozzle to alternately recharge the accumulator and release bursts of working fluid through the nozzle.

### SUMMARY

The invention relates to an oral cleaning appliance as defined in claim 1. The dependent claims define further features of the invention. In view of this, the present disclosure provides a fluid pumping unit and an oral cleaning appliance to solve the problem of contradiction between product size and cleaning power for oral irrigators in the prior art.

In a first non-claimed aspect, the present disclosure provides a fluid pumping unit for an oral cleaning appliance. The fluid pumping unit includes a housing, a displacement unit, a linkage unit and a drive unit. The housing is internally provided with a fluid pump chamber, and a fluid input channel and a fluid output channel communicated with the fluid pump chamber. The displacement unit is movably arranged in the housing, where an end face of the displacement unit facing towards a first direction is enclosed by an inner wall of the housing to form the fluid pump chamber with a variable volume. The linkage unit is arranged in the housing and is in transmission connection with an end face of the displacement unit facing towards a second direction, where the linkage unit is configured to drive the displacement unit to move to and fro along the first direction and the second direction, to recurrently increase and decrease the volume of the fluid pump chamber, such that a liquid in a fluid storage unit is pumped into the fluid pump chamber through the fluid input channel, and an impingement fluid is supplied through the fluid output channel. The drive unit is in transmission connection with the linkage unit, and the drive unit is configured to drive the linkage unit to drive the displacement unit to move to and fro. Wherein, the displacement unit has two limit positions during the to-and-fro movement along the first direction and the second direction, where a distance between the two limit positions ranges from 2.1 mm to 2.6 mm, and the volume of the fluid pump chamber ranges from 120 mm³ to 200 mm³.

In a second non-claimed aspect, the present disclosure provides an oral cleaning appliance, which includes a holding shell, a fluid storage unit and a drive mechanism. An end of the holding shell is connected to a nozzle, the fluid pumping unit is arranged in the holding shell, and the nozzle is communicated with the fluid output channel of the fluid pumping unit. The fluid storage unit is arranged in the holding shell, where a water outlet of the fluid storage unit is communicated with the fluid input channel of the fluid pumping unit. The drive mechanism is arranged in the holding shell, and the drive mechanism is configured to drive the eccentric wheel of the fluid pumping unit to rotate.

In a third aspect, the present disclosure also provides an oral cleaning appliance, which includes a holding shell, a fluid storage unit, a fluid pumping unit, and a drive mechanism. An end of the holding shell is connected to a nozzle and a brush head, a fluid storage unit is arranged in the holding shell, and a fluid pumping unit is arranged in the holding shell. The fluid pumping unit includes a housing, a displacement unit, a linkage unit, and a drive unit. The housing is internally provided with a fluid pump chamber, and a fluid input channel and a fluid output channel communicated with the fluid pump chamber, where the nozzle is communicated with the fluid output channel, and a water outlet of the fluid storage unit is communicated with the fluid input channel. The displacement unit is movably arranged in the housing, where an end face of the displacement unit facing towards a first direction is enclosed by an inner wall of the housing to form the fluid pump chamber with a variable volume. The linkage unit is arranged in the housing and is in transmission connection with an end face of the displacement unit facing towards a second direction, where the linkage unit is configured to drive the displacement unit to move to and fro along the first direction and the second direction, to recurrently increase and decrease the volume of the fluid pump chamber, such that a liquid in the fluid storage unit is pumped into the fluid pump chamber through the fluid input channel, and an impingement fluid is supplied through the fluid output channel. The drive unit includes a first drive member arranged in the holding shell and a second drive member, where the first drive member is configured to drive the brush head to perform a cleaning action, and the second drive member is in transmission connection with the linkage unit, and is configured to drive the linkage unit to drive the displacement unit to move to and fro. The displacement unit has two limit positions during the to-and-fro movement along the first direction and the second direction, where a distance between the two limit positions ranges from 2.1 mm to 2.6 mm, and a volume of the fluid pump chamber ranges from 120 mm³ to 165 mm³.

### BENEFICIAL EFFECTS

Using the technical solutions of the present disclosure, according to principles of the fluid pumping unit, the linkage unit drives the displacement unit to move to and fro to recurrently increase and decrease the volume of the fluid pump chamber, to recurrently increase and decrease pressure inside the fluid pump chamber. When the volume of the fluid pump chamber is decreased, water in the fluid storage unit enters the fluid pump chamber under the action of negative pressure. When the volume of the fluid pump chamber is increased, the water in the fluid pump chamber enters the fluid output channel to form an impingement water flow, thus forming a pulse water jet. The pulse water jet is a noncontinuous water flow, and can form huge transient energy by means of a water hammer action, so it can also increase the impingement force of the water flow while reducing water consumption to ensure cleaning effects. In addition, the distance between the two limit positions of the displacement unit ranges from 2.1 mm to 2.6 mm, and the volume of the fluid pump chamber ranges from 120 mm³ to 165 mm³, which not only can ensure the impingement force of the water flow, but also can properly reduce the size of the fluid pumping unit on this basis. In this way, the cleaning effects can be ensured with less water flow, and the size of the handle may be greatly reduced by reducing the size of the fluid pumping unit and the size of the fluid storage unit.

In addition, the nozzle and the brush head on the holding shell can realize functions of an oral irrigator and an electric toothbrush, and a user can select to use two cleaning methods separately or simultaneously to clean teeth. The principles of the fluid pumping unit are as below. The linkage unit drives the displacement unit to move to and fro to recurrently increase and decrease the volume of the fluid pump chamber, to recurrently increase and decrease the pressure inside the fluid pump chamber. When the volume of the fluid pump chamber is decreased, the liquid in the fluid storage unit enters the fluid pump chamber under the action of the negative pressure. When the volume of the fluid pump chamber is increased, the liquid in the fluid pump chamber enters the fluid output channel to form the impingement fluid, thus forming a pulse water jet. The pulse water jet is a noncontinuous fluid, and can form the huge transient energy by means of the water hammer action, so it can also increase the impingement force of the fluid while reducing liquid consumption to ensure the cleaning effects. In addition, the distance between the two limit positions of the displacement unit ranges from 2.1 mm to 2.6 mm, and the volume of the fluid pump chamber ranges from 120 mm³ to 165 mm³, which not only can ensure the impingement force of the water flow, but also can properly reduce the size of the fluid pumping unit on this basis, thereby reducing the size of the holding shell. In this way, it may be ensured that the oral cleaning appliance has the cleaning functions of the electric toothbrush and the oral irrigator, and the size of the fluid pumping unit can be reduced under the condition of ensuring the impingement force of the fluid, and the liquid can be saved. Therefore, the volume of the fluid storage unit can be further reduced, thus reducing the size of the holding shell, reducing the weight of the rinsing and brushing integrated oral irrigator, and providing the user with a better using experience.

### BRIEF DESCRIPTION OF THE DRAWINGS

To describe the technical solutions of the embodiments of the present disclosure or those of the prior art more clearly, the accompanying drawings required for describing the embodiments or the prior art will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1A illustrates a schematic structural diagram of an oral care appliance in an embodiment of the present disclosure;
FIG. 1B illustrates a schematic structural diagram of another oral care appliance in an embodiment of the present disclosure;
FIG. 2 illustrates a schematic structural diagram of a fluid pumping unit in an embodiment of the present disclosure;
FIG. 3 illustrates a schematic diagram of a cross-section structure of the fluid pumping unit in FIG. 2;
FIG. 4 illustrates an enlarged view at Part A in FIG. 3;
FIG. 5 illustrates a schematic structural diagram of matching connection between an eccentric wheel and a balance block in FIG. 3;
FIG. 6 illustrates a schematic structural diagram, in a bottom-up view, of the matching connection between the eccentric wheel and the balance block in FIG. 5;
FIG. 7 illustrates a schematic structural diagram, in a top view, of the matching connection between the eccentric wheel and the balance block in FIG. 5;
FIG. 8 illustrates experimental parameters of the fluid pumping unit in an embodiment of the present disclosure;
FIG. 9 illustrates a schematic diagram of relationship between an impingement force and a distance between two limit positions of a connecting rod;
FIG. 10 illustrates a schematic diagram of relationship between water pumping time and the distance between the two limit positions of the connecting rod;
FIG. 11 illustrates a schematic diagram of relationship between the impingement force and an internal diameter of an fluid input channel;
FIG. 12 illustrates a schematic diagram of relationship between a flow rate of a fluid pump chamber per unit time and the internal diameter of the fluid input channel;
FIG. 13 illustrates a schematic structural diagram of a rinsing handle in an embodiment of the present disclosure;
FIG. 14 illustrates a schematic structural diagram of installation positions of a power output shaft and the fluid pumping unit in an embodiment of the present disclosure;
FIG. 15 illustrates a schematic structural diagram of a connector in an embodiment of the present disclosure;
FIG.16 illustrates a schematic exploded view of the rinsing handle in an embodiment of the present disclosure; and
FIG. 17 illustrates a schematic exploded view of the power output shaft and a front shock pad and a rear shock pad.

Reference numerals in the accompanying drawings:
housing 10; fluid pump chamber 11; fluid input channel 12; fluid output channel 13; linkage unit 20; shaft hole 201; rotating shaft 21; bearing 22; balance block 23; connecting rod 30; displacement unit 40; fluid storage unit 50; liquid injection port 51; second drive member 60; holding shell 70; rinsing handle 71; fluid channel 711; power output shaft 72; axial channel 721; outlet 722; inlet 723; first drive member 73; connector 74; communication cavity 741; first end 742; second end 743; annular groove 744; mounting groove 75; lug boss 751; front shock pad 761; rear shock pad 762; nozzle 80; brush head 90; contact element carrier 901; contact element cluster 902; and hole 903.

### DETAILED DESCRIPTION

At present, an oral cleaner may combine functions of an oral irrigator and an electric toothbrush, which can simultaneously clean teeth and slits between the teeth. An oral cleaning appliance includes a brush head and a nozzle. When in use, the brush head may be used to scrape bacteria and food residue attached onto the surface of the teeth, and bacteria and food residue attached in the slits between the teeth may be removed by means of a rinsing function of the nozzle. By combining the brush head and the nozzle, the bacteria and the food residue on the surface of the teeth and in the slits between the teeth can be effectively removed, to prevent oral problems and improve oral health.

To make it easy for the oral cleaning appliance in the prior art to achieve its rinsing and brushing function, the brush head and the nozzle are generally driven by two independent motors, which increases the weight of the oral cleaning appliance to a certain extent. Especially, the part that achieves the rinsing function also includes a pump body and a water tank communicated with the pump body. When in use, the pump body can pump water out of the water tank, a water flow is jointly pressurized through the pump body and an internal reducer pipe, and then the water flow is ejected from the nozzle, so the pressurized water can clean a user's teeth. To ensure cleaning power, a conventional pump body used generally has a larger size and more water consumption. To meet requirements for water consumption of the pump body, which further increases weight of the oral cleaning appliance and also increases a size of the oral cleaning appliance, making it not convenient for the user to grip and thus reducing the user's using experience. In a conventional improvement method, to reduce the volume of the water tank on the basis of an unchanged volume of the pump body, although the size of the handle is reduced to a certain extent, water discharge of the nozzle may be affected, which may reduce the cleaning power and adversely affect cleaning effects. Therefore, the oral cleaning appliance in the prior art cannot solve the contradiction between product size and the cleaning power.

In view of this, the present disclosure provides a fluid pumping unit and an oral cleaning appliance to solve the problem of contradiction between the product size and the cleaning power for the oral irrigators in the prior art.

To make the objectives, technical solutions, and advantages of the embodiments of the present disclosure clearer, the technical solutions in the embodiments of the present disclosure will be described clearly and completely below, in conjunction with the accompanying drawings in the embodiments of the present disclosure. Apparently, the described embodiments are some but not all of the embodiments of the present disclosure. All other embodiments obtained by those skilled in the art based on the embodiments of the present disclosure without creative efforts shall fall within the protection scope of the present disclosure.

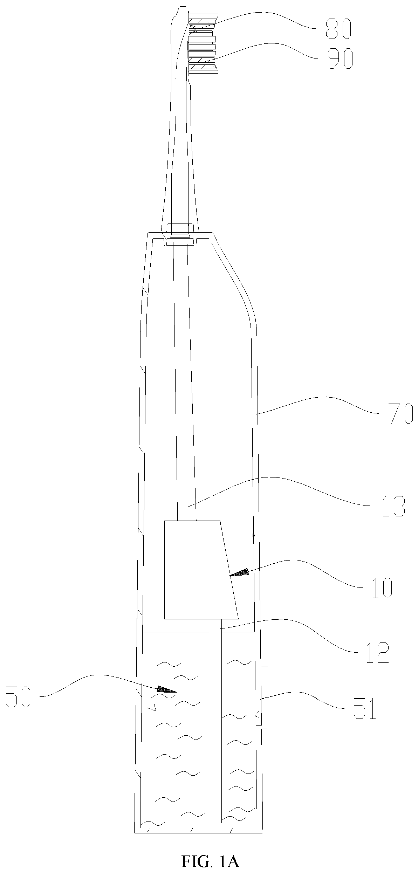

As shown in FIG. 1A and FIGS. 2 to 4, a fluid pumping unit for an oral cleaning appliance according to the present disclosure includes a housing 10, a displacement unit 40, a linkage unit 20, and a drive unit. The drive unit is a second drive member 60.

The housing 10 is internally provided with a fluid pump chamber 11, and a fluid input channel 12 and a fluid output channel 13 communicated with the fluid pump chamber 11. The fluid pump chamber 11 mainly uses changes of its internal pressure to achieve liquid inlet and liquid outlet, a one-way valve may be separately arranged on the fluid input channel 12 and the fluid output channel 13, where the one-way valve of the fluid input channel 12 allows a liquid to flow from a fluid storage unit to the fluid pump chamber 11, and the one-way valve of the fluid output channel 13 allows the fluid to flow from the fluid pump chamber 11 to the fluid output channel 13. The liquid may be clean water, mouthwash, or oral care solution, and so on. The fluid storage unit 50 is used to store the liquid. For the purpose of uniform description, a description is made below by taking water as an example.

Further, the fluid input channel 12 is communicated with the fluid storage unit 50, and the fluid output channel 13 is communicated with a nozzle 80. When pressure inside the fluid pump chamber 11 increases, the water in the fluid pump chamber 11 flows out of the nozzle 80 through the fluid output channel 13, and the one-way valve of the fluid input channel 12 prevents the water in the fluid pump chamber 11 from entering the fluid input channel 12. When the pressure inside the fluid pump chamber 11 decreases, the water in the fluid storage unit 50 enters the fluid pump chamber 11 through the fluid input channel 12, and the one-way valve of the fluid output channel 13 prevents the water in the fluid output channel 13 from flowing into the fluid pump chamber 11.

The displacement unit 40 is movably arranged in the housing 10, where an end face of the displacement unit 40 facing towards a first direction is enclosed by an inner wall of the housing 10 to form the fluid pump chamber 11 with a variable volume. In this embodiment, an edge of the displacement unit 40 may be attached onto the inner wall of the housing 10. In this way, the inner wall positioned in the first direction of the housing 10 can be enclosed by a diaphragm to form one chamber, which is the fluid pump chamber 11. The displacement unit 40 is movably arranged such that the volume of the fluid pump chamber 11 is variable. The fluid input channel 12 and the fluid output channel 13 are also positioned in the first direction and are communicated with the fluid pump chamber 11. Because of the arrangement of the one-way valve, when the volume of the fluid pump chamber 11 changes, the pressure inside the fluid pump chamber 11 may also increase or decrease, such that the liquid may be pumped from the fluid input channel 12 into the fluid pump chamber 11 by means of negative pressure, or the liquid may be pumped from the fluid pump chamber 11 to the fluid output channel 13 by means of pressure.

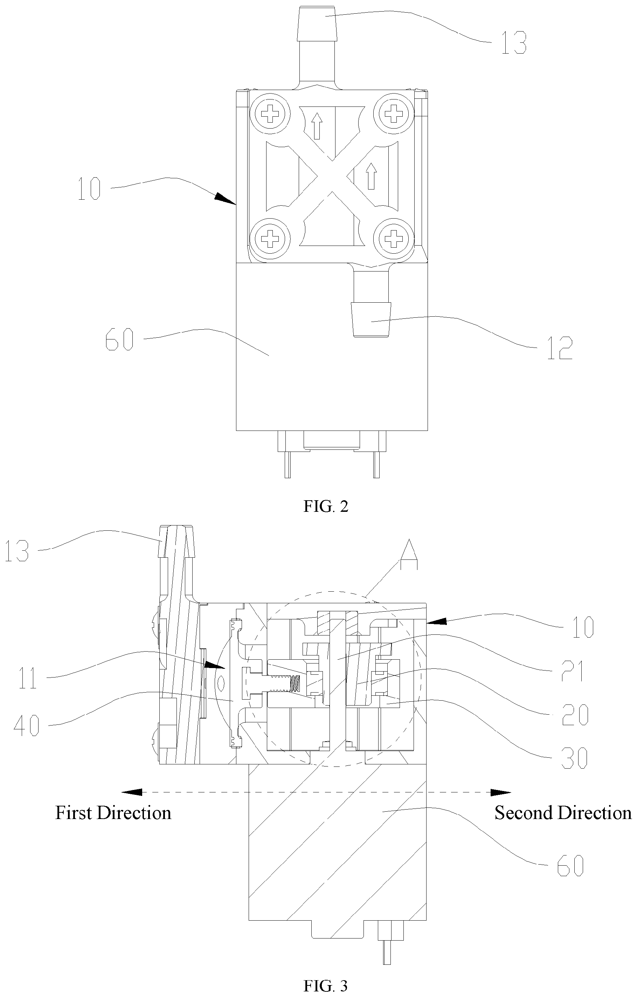

Referring to directions shown by dotted arrows in FIG. 3, bounded by the displacement unit 40, the fluid pump chamber 11 is formed in the first direction of the displacement unit 40, and the linkage unit 20 driving the displacement unit 40 to move is positioned in a second direction, which is opposite to the first direction. This setting is conducive to dry and wet separation, so the liquid is prevented from entering movement space of the linkage unit 20, thereby avoiding causing adverse impacts on the linkage unit 20 and other electrical components.

The linkage unit 20 is arranged in the housing 10 and is in transmission connection with an end face of the displacement unit 40 facing towards the second direction, where the linkage unit 20 is configured to drive the displacement unit 40 to move to and fro along the first direction and the second direction, to recurrently increase and decrease the volume of the fluid pump chamber 11, such that the liquid in the fluid storage unit 50 is pumped into the fluid pump chamber 11 through the fluid input channel 12, and an impingement fluid is supplied through the fluid output channel 13.

Referring to the first direction and the second direction shown in FIG. 3, the displacement unit 40 moves to and fro along the first direction and the second direction. The displacement unit 40 extends into the fluid pump chamber 11, and the displacement unit 40 recurrently increases and decreases the volume of the fluid pump chamber 11, such that the liquid in the fluid storage unit 50 is pumped into the fluid pump chamber 11 through the fluid input channel 12, and the impingement fluid is supplied through the fluid output channel 13. In transmission connection with the linkage unit 20, the second drive member 60 is configured to drive the linkage unit 20 to drive the displacement unit 40 to move to and fro. The displacement unit 40 has two limit positions during the to-and-fro movement along the first direction and the second direction, where the distance between the two limit positions ranges from 2.1 mm to 2.6 mm, and the volume of the fluid pump chamber 11 ranges from 120 mm³ to 165 mm³.

Specifically, a sealed space is jointly formed by the displacement unit 40, a side wall of the fluid pump chamber 11, the one-way valve of the fluid input channel 12, and the one-way valve of the fluid output channel 13. The movement of the displacement unit 40 may change the volume of the sealed space, so the pressure inside the fluid pump chamber 11 also increases or decreases accordingly. When the pressure inside the fluid pump chamber 11 decreases, under the action of negative pressure, the liquid is pumped from the fluid storage unit 50 into the fluid pump chamber 11 through the fluid input channel 12. When the pressure inside the fluid pump chamber 11 increases, the liquid is discharged from the fluid pump chamber 11 through the fluid output channel 13 to form an impingement water flow. The fluid pump chamber 11 needs to suck the liquid and then discharge it, so a noncontinuous pulse water jet is formed in the fluid output channel 13, and a water hammer pressure of the pulse water jet is greater than a stagnation pressure of a continuous pulse water jet. In principle, the pulse water jet can produce huge transient energy by means of a water hammer action, which can increase the impingement force of the water flow and thus can improve the cleaning effects. Furthermore, compared with a continuous water flow, the pulse water jet can save water consumption, so the volume of the fluid storage unit can be reduced, and the product size can be reduced.

On this basis, the distance between the two limit positions of the displacement unit 40 is within the range of 2.1 mm to 2.6 mm, which is enough to meet requirements for changes of the pressure inside the fluid pump chamber 11. So the space in the housing 10 for supporting the movement of the linkage unit 20 can be reduced accordingly, and the design size of the housing 10 is reduced, and the product size is reduced. Using the technical solutions of this embodiment, the linkage unit 20 drives the displacement unit 40 to move to and fro, such that the fluid output channel 13 forms the pulse water jet, and the liquid consumption can be saved while the impingement force is guaranteed, so demands for the liquid consumption can be met by using a smaller-sized fluid storage unit. Furthermore, the distance between the two limit positions of the displacement unit 40 ranges from 2.1 mm to 2.6 mm. Such setting reduces the space in the housing 10 for supporting the movement of the linkage unit 20 and the displacement unit 20, and reduces the size of the housing 10.

In one implementation manner of this embodiment, the linkage unit 20 includes an eccentric wheel and a connecting rod 30.

The eccentric wheel is positioned in the housing 10 and on the second direction opposite to the first direction of the displacement unit 40, where the eccentric wheel has a rotating shaft 21 deviating from its geometric center, the rotating shaft 21 runs through the eccentric wheel and extends along a rotation axis of the eccentric wheel, and the rotation axis is parallel to and not coincident with a central axis of the eccentric wheel. The connecting rod 30 is positioned between the displacement unit 40 and the eccentric wheel, where a first end of the connecting rod 30 is rotationally connected to the eccentric wheel, such that when the eccentric wheel rotates, the connecting rod 30 is driven to move to and fro along a direction perpendicular to the rotating shaft 21. A second end of the connecting rod 30 extends toward a direction of the displacement unit 40 and is connected to the end face of the displacement unit 40 facing towards the second direction. During the to-and-fro movement of the connecting rod 30, the displacement unit 40 is driven to recurrently increase and decrease, with the same stroke as the connecting rod 30, the volume of the fluid pump chamber 11, such that water in the fluid storage unit 50 is pumped into the fluid pump chamber 11 through the fluid input channel 12, and the impingement fluid is supplied through the fluid output channel 13. The second end of the connecting rod 30 has two limit positions close to the rotating shaft 21 or far away from the rotating shaft 21 during the to-and-fro movement, and the distance between the two limit positions ranges from 2.1 mm to 2.6 mm.

Referring to the directions shown by the dotted arrows in FIG. 3, bounded by the displacement unit 40, the fluid pump chamber 11 is formed in the first direction of the displacement unit 40, and the connecting rod 30 driving the displacement unit 40 to move and the eccentric wheel are positioned in the second direction, which is opposite to the first direction. This setting is conducive to dry and wet separation, such that the liquid is prevented from entering movement space of the connecting rod 30 and the eccentric wheel, thereby avoiding causing adverse impacts on the linkage unit 20 and other electrical components.

The connecting rod 30 is arranged in the housing 10 and is in transmission connection with the end face of the displacement unit 40 facing towards the second direction, where the connecting rod 30 is configured to drive the displacement unit 40 to move to and fro along the first direction and the second direction, to recurrently increase and decrease the volume of the fluid pump chamber 11, such that the liquid in the fluid storage unit 50 is pumped into the fluid pump chamber 11 through the fluid input channel 12, and the impingement fluid is supplied through the fluid output channel 13.

The eccentric wheel is positioned in the housing 10 and on the second direction opposite to the first direction of the displacement unit 40, where the eccentric wheel has a rotating shaft 21 deviating from its geometric center, and the eccentric wheel is configured to rotate around the rotating shaft 21. The rotating shaft 21 runs through the eccentric wheel and extends along the rotation axis of the eccentric wheel, and the rotation axis is parallel to and not coincident with the central axis of the eccentric wheel. The geometric center of the eccentric wheel is a central position, in a geometrical shape, of the eccentric wheel. Therefore, when rotating around the rotating shaft 21, the eccentric wheel performs an eccentric rotation.

The connecting rod 30 is positioned between the displacement unit 40 and the eccentric wheel, where a first end of the connecting rod 30 is rotationally connected to the eccentric wheel, such that when the eccentric wheel rotates, the connecting rod 30 is driven to move to and fro along the direction perpendicular to the rotating shaft 21. A second end of the connecting rod 30 extends toward a direction deviating from the rotating shaft 21, i.e. the first direction and the second direction as shown in FIG. 3. The displacement unit 40 moves to and fro along the first direction and the second direction. The first end of the connecting rod 30 may be used as a power input end, and driven by the eccentric wheel, the first end of the connecting rod 30 may rotate around a rotation center. The second end opposite to the first end may be used as a power output end, and the second end of the connecting rod 30 may perform the to-and-fro movement perpendicular to the rotating shaft 21.

The displacement unit 40 is connected to the second end of the connecting rod 30 and extends into the fluid pump chamber 11. The displacement unit 40 acts on a plane in the fluid pump chamber 11 and is parallel to the rotating shaft 21. During the to-and-fro movement of the connecting rod 30, the displacement unit 40 recurrently increases and decreases the volume of the fluid pump chamber 11, such that the water in the fluid storage unit 50 of the oral cleaning appliance is pumped into the fluid pump chamber 11 through the fluid input channel 12, and the impingement water flow is supplied through the fluid output channel 13. The second end of the connecting rod 30 has two limit positions close to the rotating shaft 21 or far away from the rotating shaft 21 during the to-and-fro movement, the distance between the two limit positions ranges from 2.1 mm to 2.6 mm, and the volume of the fluid pump chamber 11 ranges from 120 mm³ to 165 mm³.

On this basis, the distance between the two limit positions of the connecting rod 30 is in the range of 2.1 mm to 2.6 mm, which is enough for the displacement unit 40 to meet the requirements for changes of the pressure inside the fluid pump chamber 11. So the space in the housing 10 for supporting the movement of the connecting rod 30 can be reduced accordingly, and the design size of the housing 10 is reduced, and the product size is reduced. Using the technical solutions of this embodiment, the rotation of the eccentric wheel drives the displacement unit 40 to move to and fro through the second end of the connecting rod 30, such that the fluid output channel 13 forms the pulse water jet, and the liquid consumption can be saved while the impingement force is guaranteed, so demands for the liquid consumption can be met by using a smaller-sized fluid storage unit. Furthermore, the distance between the two limit positions of the connecting rod 30 ranges from 2.1 mm to 2.6 mm. Based on such setting, the space in the housing 10 for supporting the movement of the connecting rod 30 can be reduced, and the size of the housing 10 is reduced. The second drive member 60 is a brushless motor arranged in the holding shell 70, the rotating shaft 21 is an output shaft of the brushless motor, and a revolution speed of the brushless motor ranges from 3500 rpm to 4500 rpm. The brushless motor has excellent torque characteristics and a wide revolution speed range, so there is no need to additionally provide a gearbox, which further simplifies the structure and reduces the size of the holding shell 70.

The fluid storage unit is shown in FIG. 3, in which the dotted arrows indicate effective movement directions of the connecting rod 30. That is, the connecting rod 30 is required to move to and fro along the first direction and the second direction, and the two limit positions of the connecting rod 30 are positioned in the first direction and the second direction, respectively. The connecting rod 30 moves to the limit position in the first direction, and the diaphragm discharges the liquid from the fluid pump chamber 11. The connecting rod 30 moves to the limit position in the second direction, and there exists a maximum distance between the diaphragm and the fluid pump chamber 11 on the opposite side, which reduces the pressure inside the fluid pump chamber 11, such that the fluid enters the fluid pump chamber 11 from the fluid input channel 12.

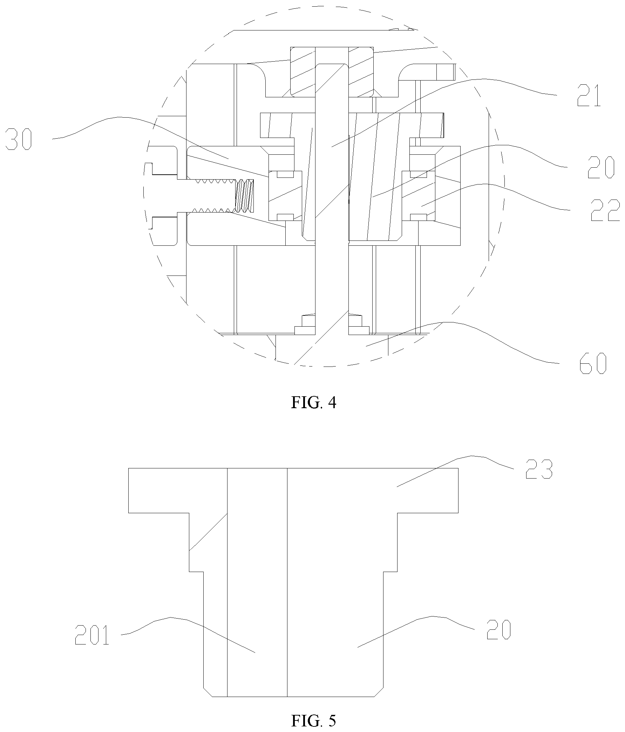

As shown in FIG. 3 and FIG. 4, the edge of the displacement unit 40 is fixed on the side wall of the fluid pump chamber 11, the displacement unit 40 may be connected to the second end of connecting rod 30 by means of a screw, and the displacement unit 40 and the screw may be formed by means of integrated injection molding, thereby simplifying the structure and reducing difficulty of assembly.

As shown in FIG. 3 and FIG. 4, the housing 10 has a cavity for accommodating the eccentric wheel, the second drive member 60 is positioned at the bottom of the housing 10, the output shaft of the second drive member 60 is extended into the cavity and is coupled with the eccentric wheel to form the rotating shaft 21, and the drive unit can drive the eccentric wheel to rotate by means of the rotating shaft 21. For example, shaft knurling may be provided on the rotating shaft 21, and the eccentric wheel is pressed onto the shaft knurling. The shaft knurling can increase a friction between the rotating shaft 21 and the eccentric wheel to ensure that the rotating shaft 21 can smoothly drive the eccentric wheel to rotate. A shaft seat is arranged in the cavity, and an end of the output shaft of the second drive member 60 may be extended into the shaft seat to improve stability of rotation of the output shaft. In addition to providing space for accommodating the above parts, the cavity also needs to provide a certain movement space for the rotation of the eccentric wheel and the to-and-fro movement of the first end of the connecting rod 30. Setting the distance between the two limit positions of the connecting rod 30 to 2.1 mm to 2.6 mm can limit the size of the movement space in the cavity, and can reduce the overall design size of the housing 10 on this basis.

A large number of experimental data demonstrate that if the distance between the two limit positions of the connecting rod 30 is smaller than 2.1 mm, a pumping force may be weakened, so the pumped water flow is insufficient and thus cannot meet the requirements of the water flow for the impingement force. However, if the distance between the two limit positions of the connecting rod 30 is greater than 2.6 mm, the design size of the cavity is too large to meet the requirements for reducing the overall design size of the housing 10. Therefore, the distance between the two limit positions of the connecting rod 30 is set between 2.1 mm and 2.6 mm. For example, the distance between the two limit positions of the connecting rod 30 may be 2.1 mm, 2.2 mm, 2.3 mm, 2.4 mm, 2.5 mm or 2.6 mm.

In this embodiment, the first end of the connecting rod 30 is coincident with the geometric center of the eccentric wheel with respect to the rotation center of the eccentric wheel, and an eccentric distance of the eccentric wheel ranges from 1.05 mm to 1.3 mm. When the first end of the connecting rod 30 is coincident with the geometric center of the eccentric wheel with respect to the rotation center of the eccentric wheel, a movement stroke of the second end of the connecting rod is twice the eccentric distance of the eccentric wheel, and the eccentric distance of the eccentric wheel is set in the range of 1.05 mm to 1.3 mm. In this way, it may be ensured that the distance between the two limit positions of the connecting rod 30 ranges from 2.1 mm to 2.6 mm.

As shown in FIG. 4 and FIG. 5, in this embodiment, a cross section shape of the eccentric wheel perpendicular to the rotating shaft 21 is configured as a circle, and the first end of the connecting rod 30 is provided with a sleeve hole, where an axis of the sleeve hole is parallel to the rotating shaft 21, and the sleeve hole is arranged outside the eccentric wheel. The eccentric wheel is provided with a shaft hole 201 that fits with the rotating shaft 21, the eccentric wheel is shaped like a circle, and the sleeve hole may also be shaped like a circle, thereby reducing the friction between the eccentric wheel and the first end of the connecting rod 30, to ensure that the first end of the connecting rod 30 fits with an outer edge of the eccentric wheel to perform the circular to-and-fro movement through the sleeve hole. The eccentric wheel rotates 360° around the rotating shaft 21, which is deemed as a complete stroke of the connecting rod 30. The first end of the connecting rod 30 performs the circular to-and-fro movement, which is more conducive to controlling the distance between the two limit positions of the connecting rod 30 to be between 2.1 mm and 2.6 mm, to ensure that the movement of the displacement unit 40 can provide a stable pressure difference.

To further reduce the friction between the eccentric wheel and the sleeve hole, a bearing 22 may be arranged between the eccentric wheel and the connecting rod 30, where the bearing 22 is sleeved on the eccentric wheel, and the sleeve hole is sleeved on the bearing 22. The bearing 22 can reduce the friction between the eccentric wheel and the connecting rod 30, to prevent the eccentric wheel from driving the connecting rod to coaxially rotate. In this way, it is ensured that the connecting rod 30 may perform the circular to-and-fro movement along the direction perpendicular to the rotating shaft 21.

Because a barycenter of the eccentric wheel is not positioned on the axis of the rotating shaft 21, an unbalanced centrifugal force may be generated during the rotation of the eccentric wheel, and an unbalanced torque generated increases a burden on the output shaft of the second drive member 60, which not only increases a friction resistance of an axis cylinder, but also increases heat generation.

To solve the above problems, as shown in FIG. 5, FIG. 6 and FIG. 7, in this embodiment, the eccentric wheel is connected to a balance block 23, where the balance block 23 is configured to increase weight of the rotating shaft 21 of the eccentric wheel to balance a torque of the eccentric wheel during rotation. Specifically, two opposite ends of the balance block 23 have different weights, one end having a larger weight is arranged on a top of the shaft hole 201, the shaft hole 201 extends until it runs through the end face of the balance block 23, and the other end having a smaller weight is arranged on a top at an opposite side of the shaft hole 201. Such arrangement can increase mass of a side of the rotating shaft 21, such that taking the rotating shaft 21 as a center, two opposite sides of the eccentric wheel have equal or proximate weight. In this case, when the eccentric wheel rotates, the centrifugal force is equal at two ends of the eccentric wheel, thus solving the problem of unbalanced centrifugal forces at the two ends of the eccentric wheel. In this way, the torque of the output shaft of the second drive member 60 is balanced, such that the rotation of the output shaft of the second drive member 60 is more stable, which not only decreases the friction resistance of the axis cylinder, but also decreases the heat generation. In addition, by arranging the balance block 23 on the top of the eccentric wheel, occurrence of movement interference between the balance block 23 and the connecting rod 30 can be avoided, thereby avoiding causing interference with transmission between the eccentric wheel and the connecting rod 30.

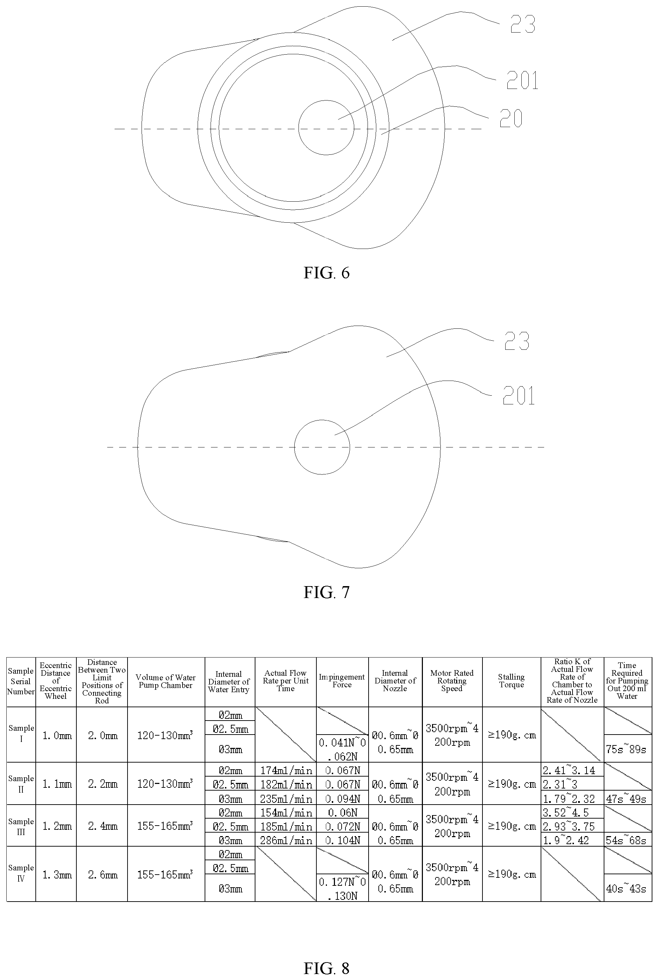

In one specific implementation manner of this embodiment, the cross section of the balance block 23 may be a symmetric figure, and the dashed line shown in FIG. 6 and FIG. 7 is a symmetry axis of the balance block 23. In this way, introduction of a new unbalance force may be avoided. Specifically, taking the direction shown in FIG. 7 as an example, the shape of the balance block 23 is roughly as below. The shape has two curved sides in left and right directions, where a length of the left curved side is shorter than that of the right curved side; and the shape has two sloping sides in upper and lower directions, where the sloping sides are inclined outward towards the right arc. This leads to a fact that a right-side size of the balance block 23 is greater than a left-side size thereof, and that a right-side weight of the balance block 23 is greater than a left-side weight thereof based on average density of the balance block 23. The centrifugal forces on the left and right sides of the eccentric wheel during rotation are balanced in turn.

Of course, the structure of the balance block 23 may also be adjusted adaptively, as long as the weight of the shaft hole 201 of the eccentric wheel is increased.

In this embodiment, the eccentric wheel and the balance block 23 are integrally formed to facilitate production and reduce assembly errors. The eccentric wheel also may be connected to the balance block 23 by means of a fastener, etc. For example, the balance block 23 is fixed onto the eccentric wheel by means of screws, which is convenient for subsequent adjustment or replacement of the balance block 23.

In another implementation manner of this embodiment, the second drive member 60 is a linear motor arranged in the holding shell 70, the linkage unit 20 is the output shaft of the linear motor, the stroke of the output shaft ranges from 2.1 mm to 2.6 mm, and the output shaft of the linear motor drives the displacement unit 40 to perform the to-and-fro movement, to provide a recurrently increased and decreased pressure to the fluid pump chamber 11.

In this embodiment, the volume of the fluid pump chamber 11 ranges from 120 mm³ to 165 mm³. The water discharge of the fluid output channel 13 per unit time is related to the volume of the fluid pump chamber 11. Specifically, the water discharge of the fluid output channel 13 per unit time increases with the increase of the volume of the fluid pump chamber 11. When a pipe diameter of the fluid output channel 13 remains unchanged, the impingement force of the water flow increases with the increase of the water discharge per unit time. A large number of experiments demonstrate that when the distance between the two limit positions of the connecting rod 30 ranges from 2.2 mm to 2.4 mm and the volume of the fluid pump chamber 11 is within the range of 120 mm³ to 165 mm³, the pressure inside the fluid output channel 13 not only can meet the requirements for the impingement force, but also can meet the requirements for saving water. When the volume of the fluid pump chamber 11 is smaller than 120 mm³, the water flow is too small to meet the requirements for the impingement force. However, when the volume of the fluid pump chamber 11 is greater than 165 mm³, although the requirements for the impingement force can be met, there is too much water discharge per unit time, this means that it may accelerate consumption of the water in the fluid storage unit 50, which results in failure to meet the requirements of cleaning time and thus has adverse impact on the cleaning effects.

Further preferably, in this embodiment, when the volume of the fluid pump chamber 11 ranges from 120 mm³ to 130 mm³, the distance between the two limit positions of the connecting rod 30 during the to-and-fro movement is selected to be 2.2 mm.

For example, the volume of the fluid pump chamber 11 may be 120 mm³, 121 mm³, 122 mm³, 123 mm³..., or 130 mm³. As shown in FIG. 3, when the second end of the connecting rod 30 moves to the limit position in the first direction, the diaphragm may be fully attached onto the side wall of the fluid pump chamber 11, such that the liquid is completely discharged from the fluid pump chamber 11. When the limit position is greater than 2.2 mm, this may cause occurrence of movement interference between the diaphragm and the side wall of the fluid pump chamber 11 during the movement of the second end of the connecting rod 30 to the limit position in the first direction.

Further preferably, in this embodiment, when the volume of the fluid pump chamber ranges from 155 mm³ to 165 mm³, the distance between the two limit positions of the connecting rod 30 during the to-and-fro movement is selected to be 2.4 mm.

For example, the volume of the fluid pump chamber 11 may be 155 mm³, 156 mm³, 157 mm³, 158 mm³..., or 165 mm³. As shown in FIG. 3, when the second end of the connecting rod 30 moves to the limit position in the first direction, the diaphragm may be fully attached onto the side wall of the fluid pump chamber 11, such that the liquid is completely discharged from the fluid pump chamber 11. If the limit position is smaller than 2.4 mm, this may cause existence of a gap between the diaphragm and the side wall of the fluid pump chamber 11 when the second end of the connecting rod 30 moves to the limit position in the first direction, which reduces operating efficiency of the fluid pump chamber 11.

In this embodiment, by optimizing each parameter of the fluid pumping unit, the fluid pumping unit is more water-saving while the cleaning power is ensured. Therefore, the size of the fluid storage unit of the oral cleaning appliance can be made smaller, which solves the contradiction between the product size and the cleaning power for the oral irrigators in the prior art.

Principle description of the movement of each component of the fluid pumping unit in this embodiment is made above, and basis for a value of each parameter for the fluid pumping unit in this embodiment is introduced in detail below.

### I. The value of the distance between the two limit positions of the connecting rod 30 during the to-and-fro movement

To change the size of the oral cleaning appliance, it is required to give priority to a component having a larger volume in the oral cleaning appliance. At present, parameters having a direct impact on the size of the oral cleaning appliance at least include the volume of the fluid pumping unit and the volume of the fluid storage unit. The fluid pumping unit not only needs to provide accommodation space for each moving part, but also needs to provide movement space for each moving part, so the connecting rod 30 may be improved from the perspective of the accommodation space and the movement space. To select an optimal range of the distance between the two limit positions of the connecting rod 30 during the to-and-fro movement, in the case that only the distance between the two limit positions of the connecting rod 30 during the to-and-fro movement is changed while other parameters remain unchanged, referring to FIG. 8, applicants obtain experimental data of the following four groups of samples through experiments.

Sample I: the distance is 2.0 mm, the impingement force is 0.041 N to 0.062 N, and time required for pumping out 200 ml water is 75 s to 89 s.

Sample II: the distance is 2.2 mm, the impingement force is 0.90 N to 0.98 N, and the time required for pumping out 200 ml water is 54 s to 68 s.

Sample III: the distance is 2.4 mm, the impingement force is 0.107 N to 0.114 N, and the time required for pumping out 200 ml water is 47 s to 49 s.

Sample IV: the distance is 2.6 mm, the impingement force is 0.127 N to 0.130 N, and the time required for pumping out 200 ml water is 40 s to 43 s.

The greater the impingement force is, the stronger the cleaning power is; and the smaller the impingement force is, the weaker the cleaning power is. The shorter the time required for pumping out 200 ml water is, the more water is consumed; and the longer the time required for pumping out 200 ml water is, the less water is consumed. As can be seen from the above experimental data, the stronger the cleaning power is, the more water is consumed, so the two conditions need to be balanced.

Further, as the distance between the two limit positions of the connecting rod 30 increases during the to-and-fro movement, concave-convex deformation capacity of the diaphragm may increase accordingly, which increases water intake and water discharge of the fluid pump chamber 11. The more the water discharge is, the stronger the impingement force of the fluid output channel 13 is. According to the experiments, it is found that the demands for oral cleaning have been met when the impingement force is ≥0.07 N. Therefore, the standard impingement force ≥0.07 N may be used as the basis in subsequent experiments for determining other design parameters.

In the Sample I, the time required for pumping out 200 ml water is longer, so the objective of saving water may be achieved. However, the cleaning power does not meet the requirements, and thus the demands for oral cleaning cannot be met. Therefore, the Sample I is eliminated.

In the Sample IV, although the impingement force is stronger, the time required for pumping out 200 ml water is too short, which likely cannot meet the cleaning time once. Therefore, the Sample IV is eliminated.

In the Sample II and the Sample III, the impingement force is sufficient, and the time required for pumping out 200 ml water is relatively reasonable. Therefore, the Sample II and the Sample III are retained.

To sum up, in this embodiment, the distance between the two limit positions of the connecting rod 30 during the to-and-fro movement is finally determined to be between 2.2 mm and 2.4 mm. Within this range, the water discharge per unit time can be satisfied, and the requirements for the standard impingement force can be met. Furthermore, the water discharge per unit time can be controlled within a certain range. Thus, it is not required to increase the volume of the fluid storage unit 50. Specifically, when the distance between the two limit positions of the connecting rod 30 is smaller than 2.2 mm, this may lead to insufficient water flow and thus cannot meet the requirements for the impingement force of the water flow. When the distance between the two limit positions of the connecting rod 30 is greater than 2.4 mm, the design size of the cavity is too large to meet the requirements for reducing the overall design size of the housing 10. Furthermore, the water discharge per unit time may be increased, such that the fluid storage unit 50 having a larger volume is required to provide sufficient water storage.

### II. The value range of the volume of the fluid pump chamber 11

The volume of the fluid pump chamber 11 in this embodiment is related to the flow rate of the water discharged from the diaphragm during a complete concave-convex deformation. Therefore, the volume of the fluid pump chamber 11 not only needs to satisfy requirements for the sufficient flow rate per unit time but also needs to satisfy requirements for conforming to a deformation stroke of the diaphragm. The flow rate of the fluid pump chamber 11 per unit time is related to the revolution speed of the motor. In this embodiment, the revolution speed n of the motor preferably ranges from 3500 rpm to 4500 rpm. When the revolution speed n of the motor is smaller than 3500 rpm, it is unable to guarantee that the calculated flow rate of the fluid pump chamber 11 per unit time meets the requirements. However, when the revolution speed n of the motor is greater than 4500 rpm, excessive noise may be generated. The flow rate of the fluid pump chamber 11 per unit time may be calculated by means of the following equation: Q_{fluid pump chamber}, where Q_{fluid} pump chamber represents the flow rate of the fluid pump chamber 11 per unit time;n represents the revolution speed of the motor, that is, the revolution speed of the eccentric wheel; and v represents the volume of the fluid pump chamber 11. Based on the above equation, the flow rate of the fluid pump chamber 11 per unit time may be calculated, and a jet impingement force may be calculated by means of the equation F=10.2*ρ*Q_{fluid pump chamber}²/A when a caliber of the fluid output channel 13 is unchanged, where F represents the jet impingement force, ρ represents density of a jet medium, which may be water. A may represent a cross-sectional area of a jet pipe, where the jet pipe at least includes the cross-sectional area of the fluid output channel 13, and a nozzle for oral cleaning.

Reference is made to the experimental data shown in FIG. 8.

In the Sample I, the distance is 2.0 mm, and the volume of the fluid pump chamber 11 ranges from 120 mm³ to 130 mm³. The time required for pumping out 200 ml water is longer, but the impingement force only ranges from 0.041 N to 0.062 N, which cannot meet the standard requirements for the impingement force. Therefore, the Sample I is eliminated. By comparing the Sample I and the Sample II, it is to be found that the volume of the fluid pump chamber 11 is not changed, but the distance in the Sample I is smaller, which is unable to ensure that the diaphragm can maintain higher operating efficiency.

In the Sample IV, the distance is 2.6 mm, and the volume of the fluid pump chamber 11 ranges from 155 mm³ to 165 mm³. The Sample IV can meet the standard requirements for the impingement force. However, compared with the Sample III, the Sample III not only can meet the requirements for the impingement force, but also is more water-saving. Therefore, the Sample IV is eliminated.

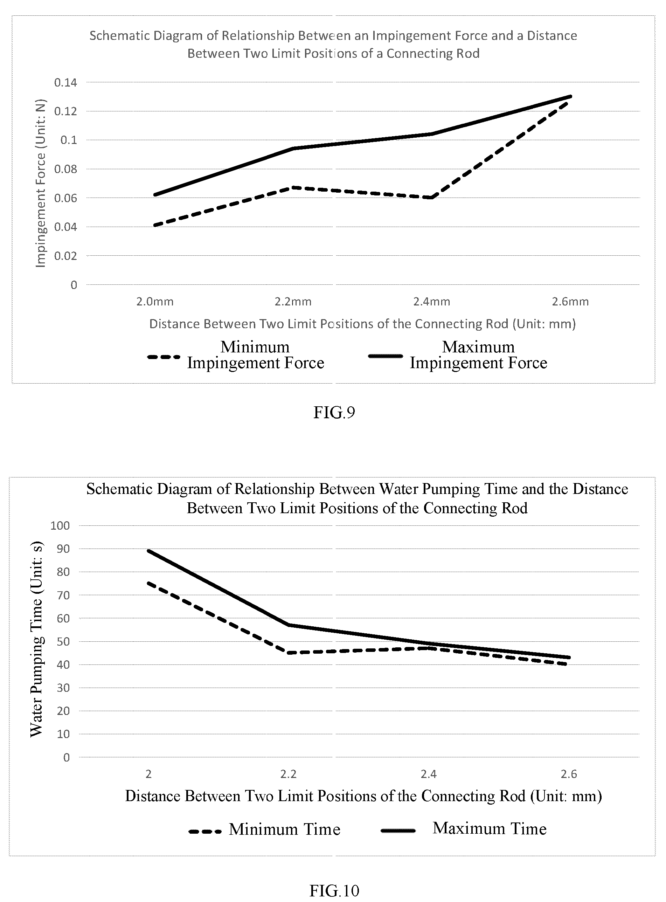

FIG. 9 illustrates a schematic diagram of relationship between the impingement force and the distance between the two limit positions of the connecting rod, where the dashed line corresponds to the minimum impingement force and the solid line corresponds to the maximum impingement force. An analysis is made as follows.

It is to be noted that, considering that utilization rate of the fluid pump chamber 11 is restricted by the limit position of the connecting rod 30 and the volume of the fluid pump chamber 11, it is required to ensure that the utilization rate of the fluid pump chamber 11 is maintained at a higher level as far as possible. Major impact criteria are as below. In the process of completing a stroke by the connecting rod 30, based on a fact whether the diaphragm can be fully attached onto the side wall when it moves to a limit distance along the direction of the fluid pump chamber 11, following four groups of data are obtained to ensure that the utilization rate of the fluid pump chamber 11 is at a higher level. For example, the distance between the two limit positions of the connecting rod 30 is 2.0 mm, and the volume of the fluid pump chamber is 120 mm³ to 130 mm³; the distance between the two limit positions of the connecting rod 30 is 2.2 mm, and the volume of the fluid pump chamber is 120 mm³ to 130 mm³; the distance between the two limit positions of the connecting rod 30 is 2.4 mm, and the volume of the fluid pump chamber is 155 mm³ to 165 mm³; and the distance between the two limit positions of the connecting rod 30 is 2.6 mm, and the volume of the fluid pump chamber is 155 mm³ to 165 mm³.

As can be seen from the dashed line in FIG. 9, the minimum impingement force does not increase in equal proportion as the distance between the two limit positions of the connecting rod 30 increases. When the distance between the two limit positions of the connecting rod 30 ranges from 2.0 mm to 2.2 mm, the change of the minimum impingement force shows a first increasing trend. When the distance between the two limit positions of the connecting rod 30 ranges from 2.2 mm to 2.4 mm, the change of the minimum impingement force shows a first decreasing trend. When the distance between the two limit positions of the connecting rod 30 ranges from 2.4 mm to 2.6 mm, the change of the minimum impingement force shows a second increasing trend. In the above data, there is difference in the volume of the fluid pump chamber 11, so it may be classified into following three cases.

In the first case, the volume of the fluid pump chamber 11 ranges from 120 mm³ to 130 mm³, and the distance between the two limit positions of the connecting rod 30 ranges from 2.0 mm to 2.2 mm. As the distance between the two limit positions of the connecting rod 30 increases, the impingement force also increases. This is because the increased distance between the two limit positions of the connecting rod 30 directly affects the utilization rate of the fluid pump chamber 11. That is, the stroke of the diaphragm is increased, such that water intake capacity of the fluid pump chamber 11 is increased, which also directly affects the flow rate of the fluid pump chamber 11 per unit time, thereby increasing the impingement force.

In the second case, the volume of the fluid pump chamber 11 ranges from 155 mm³ to 165 mm³, and the distance between the two limit positions of the connecting rod 30 ranges from 2.4 mm to 2.6 mm. As the distance between the two limit positions of the connecting rod 30 increases, the impingement force also increases. This is because the increased distance between the two limit positions of the connecting rod 30 directly affects the utilization rate of the fluid pump chamber 11. That is, the stroke of the diaphragm is increased, such that the water intake capacity of the fluid pump chamber 11 is increased, which also directly affects the flow rate of the fluid pump chamber 11 per unit time, thereby increasing the impingement force.

In the third case, the volume of the fluid pump chamber 11 ranges from 120 mm³ to 130 mm³, and the distance between the two limit positions of the connecting rod 30 is 2.2 mm. In addition, the volume of the fluid pump chamber 11 ranges from 155 mm³ to 165 mm³, and the distance between the two limit positions of the connecting rod 30 is 2.4 mm. From the perspective of change trend, although the volume of the fluid pump chamber 11 and the distance between the two limit positions of the connecting rod 30 increase, the minimum impingement force decreases. Thus, it is confirmed that the impingement force does not increase proportionally with the increase in the volume of the fluid pump chamber 11 and the distance between the two limit positions of the connecting rod 30.

As seen from the comparison between the first case and the second case, when the volume of the fluid pump chamber 11 is the same, as the distance between the two limit positions of the connecting rod 30 increases, the utilization rate of the fluid pump chamber 11 gradually increases, and the water discharge increases. In this case, the impingement force also gradually increases, and the first increasing trend is smaller than the second increasing trend. This indicates that when the volume of the fluid pump chamber 11 and the distance between the two limit positions of the connecting rod 30 increase, amplitude of increase in the impingement force is larger with the increase in the distance between the two limit positions of the connecting rod 30, which is easier to meet the requirements for a greater impingement force. Furthermore, this indicates that when the volume of the fluid pump chamber 11 and the distance between the two limit positions of the connecting rod 30 are smaller, it is easier to meet the requirements for a stable impingement force. As can be seen from the third case, in addition to the distance between the two limit positions of the connecting rod 30 and the volume of the fluid pump chamber 11, there are other factors affecting the impingement force.

As can be seen from the solid line in FIG. 9, as the distance between the two limit positions of the connecting rod 30 increases, the maximum impingement force does not increase in equal proportion. When the distance between the two limit positions of the connecting rod 30 ranges from 2.0 mm to 2.2 mm, the change of the maximum impingement force presents a third increasing trend. When the distance between the two limit positions of the connecting rod 30 ranges from 2.2 mm to 2.4 mm, the change of the maximum impingement force presents a fourth increasing trend. When the distance between the two limit positions of the connecting rod 30 ranges from 2.4 mm to 2.6 mm, the change of the maximum impingement force presents a fifth increasing trend. There are obvious differences between the third increasing trend, the fourth increasing trend, and the fifth increasing trend. FIG. 10 illustrates a schematic diagram of relationship between water pumping time and the distance between the two limit positions of the connecting rod, where the dashed line corresponds to minimum time, and the solid line corresponds to maximum time. An analysis is made as below.

As can be seen from the dashed line in FIG. 10, as the distance between the two limit positions of the connecting rod 30 increases, the minimum time does not show a proportionally decreasing trend. When the distance between the two limit positions of the connecting rod 30 ranges from 2.0 mm to 2.2 mm, the change of the minimum time shows a first decreasing trend. When the distance between the two limit positions of the connecting rod 30 ranges from 2.2 mm to 2.4 mm, the change of the minimum time shows a first rising trend. When the distance between the two limit positions of the connecting rod 30 ranges from 2.4 mm to 2.6 mm, the change of the minimum time shows a second decreasing trend. The shorter the water pumping time is, the greater the actual flow rate of the fluid pump chamber 11 per unit time is, the more water is consumed, which may be classified into the following three cases.

In the first case, the volume of the fluid pump chamber 11 is between 120 mm³ and 130 mm³, and the distance between the two limit positions of the connecting rod 30 ranges from 2.0 mm to 2.2 mm. As the distance between the two limit positions of the connecting rod 30 increases, the minimum time becomes shorter. Corresponding to the above analysis results in FIG. 9, the impingement force also increases. It is not difficult to determine that as the distance between the two limit positions of the connecting rod 30 increases, the flow rate of the fluid pump chamber 11 per unit time also increases, thus increasing the impingement force, which confirms the above analysis.

In the second case, the volume of the fluid pump chamber 11 is between 155 mm³ and 165 mm³, and the distance between the two limit positions of the connecting rod 30 ranges from 2.4 mm to 2.6 mm. As the distance between the two limit positions of the connecting rod 30 increases, the minimum time becomes shorter. Corresponding to the above analysis results in FIG. 9, the impingement force also increases. It is not difficult to determine that as the distance between the two limit positions of the connecting rod 30 increases, the flow rate of the fluid pump chamber 11 per unit time also increases, thus increasing the impingement force, which confirms the above analysis.

In the third case, the volume of the fluid pump chamber 11 ranges from 120 mm³ to 130 mm³, and the distance between the two limit positions of the connecting rod 30 is 2.2 mm; and the volume of the fluid pump chamber 11 ranges from 155 mm³ to 165 mm³, and the distance between the two limit positions of the connecting rod 30 is 2.4 mm. From the perspective of change trend, although the volume of the fluid pump chamber 11 and the distance between the two limit positions of the connecting rod 30 increase, the minimum time becomes longer, which corresponds to the analysis in FIG. 9, and the minimum impingement force decreases, which confirms the above analysis.

As can be seen from the solid line in FIG. 9, the maximum time does not decrease in equal proportion as the distance between the two limit positions of the connecting rod 30 increases. When the distance between the two limit positions of the connecting rod 30 ranges from 2.0 mm to 2.2 mm, the change of the maximum time shows a third decreasing trend. When the distance between the two limit positions of the connecting rod 30 ranges from 2.2 mm to 2.4 mm, the change of the maximum time shows a fourth decreasing trend. When the distance between the two limit positions of the connecting rod 30 ranges from 2.4 mm to 2.6 mm, the change of the maximum time shows a fifth decreasing trend. There is an obvious difference between the third decreasing trend, the fourth decreasing trend, and the fifth decreasing trend.

As can be seen from the above two analysis processes, the water discharge of the fluid pump chamber 11 per unit time has become a factor affecting the impingement force. On the whole, when the volume of the fluid pump chamber 11 is within a smaller range, it is required to ensure that the distance between the two limit positions of the connecting rod 30 meets the requirements to ensure that the fluid pump chamber 11 has sufficient efficiency. Furthermore, the volume of the fluid pump chamber 11 should not be too small, to ensure that there is enough water discharge to meet the requirements for the impingement force. When the volume of the fluid pump chamber 11 is within a greater range, it is required to properly control the distance between the two limit positions of the connecting rod 30 to control the actual flow rate of the fluid pump chamber 11 per unit time to meet the requirements for water saving.

Therefore, when the volume of the fluid pump chamber 11 is smaller than 120 mm³, this may lead to insufficient water discharge, and it is unable to meet the standard requirements for the impingement force if a cross-sectional area of the water discharge is not changed. When the volume of the fluid pump chamber 11 is greater than 165 mm³, this may lead to excessive water discharge per unit time. Although the standard requirements for the impingement force can be met, this may accelerate consumption of the water stored in the fluid storage unit 50. Demands for water consumption can be met by increasing the volume of the fluid storage unit 50, which may, however, undoubtedly increase the overall size of the oral cleaning appliance. Therefore, when the volume of the fluid pump chamber 11 is within the range of 120 mm³ to 165 mm³, the standard requirements for the impingement force can be met, and the flow rate of the fluid pump chamber 11 per unit time can be controlled, thereby achieving the objective of saving water, to reduce the volume of the fluid storage unit 50.

Because the distance between two limit deformation strokes of the diaphragm corresponds to the distance between the two limit positions of the connecting rod 30 during the movement, under the premise of ensuring maximum efficiency of the fluid pump chamber 11, it may be classified into at least two cases as below.

In the first case, when the distance between the two limit positions of the connecting rod 30 during the to-and-fro movement is 2.2 mm, the volume of the fluid pump chamber 11 ranges from 120 mm³ to 130 mm³. As shown in FIG. 3, when the second end of the connecting rod 30 moves to the limit position in the first direction, the diaphragm may be fully attached onto the side wall of the fluid pump chamber 11, such that the liquid is completely discharged from the fluid pump chamber 11, to achieve the maximum efficiency of the fluid pump chamber 11. If the volume of the fluid pump chamber 11 is greater than 130 mm³, when the second end of the connecting rod 30 moves to the limit position in the first direction, there may be a gap between the diaphragm and the side wall of the fluid pump chamber 11, which reduces the efficiency of the fluid pump chamber 11.

In the second case, when the distance between the two limit positions of the connecting rod 30 during the to-and-fro movement is 2.4 mm, the volume of the fluid pump chamber 11 ranges from 155 mm³ to 165 mm³. As shown in FIG. 3, when the second end of the connecting rod 30 moves to the limit position in the first direction, the diaphragm may be fully attached onto the side wall of the fluid pump chamber 11, such that the liquid is completely discharged from the fluid pump chamber 11, to achieve the maximum efficiency of the fluid pump chamber 11. When the volume of the fluid pump chamber 11 is smaller than 155 mm³, it may cause interference between the side wall of the fluid pump chamber 11 and the diaphragm, resulting in the diaphragm unable to complete the deformation stroke of the limit distance of 2.4 mm.

In this embodiment, a ratio of a calculated flow rate of the fluid pump chamber per unit time to an actual flow rate of the fluid output channel per unit time may satisfy the following equation: K = Q_{fluid pump chamber}/Q_{fluid} output channel, where K represents the ratio of the calculated flow rate of the fluid pumping unit per unit time to the actual flow rate of the fluid output channel per unit time, and K is in the range of 2.93≤K≤3.75, Q_{fluid pump chamber} represents the calculated flow rate of the fluid pump chamber per unit time, and Q_{fluid output channel} represents the actual flow rate of the fluid output channel per unit time. That is, the actual flow rate per unit time may be determined by measuring the actual water discharge of the fluid output channel 13.

Based on a large number of experimental data, it is found that the smaller the K value is, the more liquid flows out of the fluid output channel 13 per unit time, and the greater the impingement force is; and the greater the K value is, the less liquid flows out of the fluid output channel 13 per unit time, and the smaller the impingement force is. On the basis of the standard requirements for the impingement force, when the K value is greater than 3.75, the impingement force of the fluid output channel 13 cannot meet the standard requirements for the impingement force. When the K value is smaller than 2.93, although the standard requirements for the impingement force can be met, the actual flow rate per unit time may be increased, resulting in excessive liquid consumption, which cannot meet the requirements for water saving.

Further, a difference value between Q_{fluid pump chamber} and Q_{fluid output channel} is caused by a pressure loss caused by frictional drag applied to the water in a liquid pipeline. For example, in addition to the fluid input channel 12 and the fluid output channel 13 introduced in this embodiment, the water may also pass through an elbow, a tee, a reducer, a valve and so on after leaving the fluid storage unit 50 or before entering the nozzle 80. A flow state of the water may change dramatically. That is, cases such as diversion, acceleration, impingement, vortex and deformation may occur, which may cause pressure loss, and thus may lead to failure of pumping the water into the fluid pump chamber 11 according to calculated data. Consequently, the water cannot be completely discharged from the fluid pump chamber 11 according to the calculated water discharge.

### III. The value range of the internal diameter of the fluid input channel 12

Principles of replenishing the fluid pump chamber 11 with water are as below. The liquid in the fluid storage unit 50 is pumped into the fluid pump chamber 11 through the fluid input channel 12 by means of negative pressure. The internal diameter of the fluid input channel 12 may affect the frictional drag of the liquid. Based on a large number of experimental data, it is found that the smaller the internal diameter of the fluid input channel 12 is, the greater the frictional drag of the liquid is, the less liquid enters the fluid pump chamber 11, the smaller the actual flow rate of the fluid output channel 13 is, and the smaller the impingement force of the water flow is. It is also found that the larger the internal diameter of the fluid input channel 12 is, the smaller the frictional drag of the liquid is, the more liquid enters the fluid pump chamber 11, the greater the actual flow rate of the fluid output channel 13 is, and the greater the impingement force of the water flow is.

Reference is made to the experimental data shown in FIG. 8.

The Sample II: the distance is 2.2 mm, and the volume of the fluid pump chamber 11 ranges from 120 mm³ to 130 mm³. When the internal diameter of the fluid input channel 12 is 2.0 mm, the actual flow rate per unit time is 174 ml/min, and the impingement force is 0.067 N. When the internal diameter of the fluid input channel 12 is 2.5 mm, the actual flow rate per unit time is 182 ml/min, and the impingement force is 0.067 N. When the internal diameter of the fluid input channel 12 is 3.0 mm, the actual flow rate per unit time is 235 ml/min, and the impingement force is 0.094 N. As can be seen from the above data, with the increase of the internal diameter of the fluid input channel 12, the actual flow rate per unit time may also increase, and the impingement force may also increase. When the internal diameter of the fluid input channel 12 is 2.0 mm and 2.5 mm, the impingement force is 0.067 N, which has a value difference of 0.003 N from the standard impingement force. Impacts of 0.003 N on the cleaning effects may be ignored in actual use.

The Sample III: the distance is 2.4 mm, and the volume of the fluid pump chamber 11 ranges from 155 mm³ to 165 mm³. When the internal diameter of the fluid input channel 12 is 2.0 mm, the actual flow rate per unit time is 154 ml/min, and the impingement force is 0.06 N. When the internal diameter of the fluid input channel 12 is 2.5 mm, the actual flow rate per unit time is 185 ml/min, and the impingement force is 0.072N. When the internal diameter of the fluid input channel 12 is 3.0 mm, the actual flow rate per unit time is 286 ml/min, and the impingement force is 0.104 N. As can be seen from the above data, with the increase of the internal diameter of the fluid input channel 12, the actual flow rate per unit time may also increase, and the impingement force may also increase.

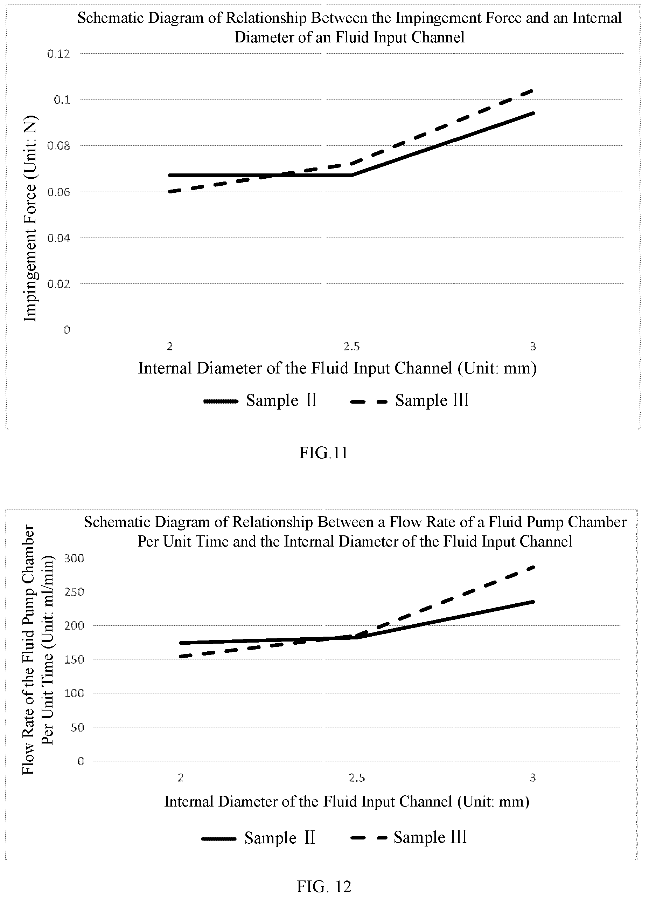

FIG. 11 illustrates a schematic diagram of relationship between the impingement force and the internal diameter of the fluid input channel, where the solid line corresponds to the experimental data of the Sample II, and the dashed line corresponds to the experimental data of the Sample III. An analysis is made as follows.

As can be seen from the solid line corresponding to the Sample II, when the internal diameter of the fluid input channel 12 increases, the impingement force also increases, and the change trend of the impingement force does not increase in equal proportion to a coefficient. For example, when the internal diameter of the fluid input channel 12 ranges from 2.0 mm to 2.5 mm, the impingement force hardly changes. However, in the range of 2.5 mm to 3.0 mm, the impingement force shows a sudden increasing trend. This is because there are many factors restricting the actual flow rate of the fluid input channel 12, such as the internal diameter of the fluid input channel 12, the distance between the two limit positions of the connecting rod 30, the volume of the fluid pump chamber 11, and the revolution speed of the motor, etc. In this embodiment, changing the internal diameter of the fluid input channel 12 is taken as an example. When the internal diameter of the fluid input channel 12 is changed, the frictional drag of the fluid input channel 12 also decreases. In this case, only when the frictional drag of the fluid input channel 12 decreases to a certain threshold, can the sudden increasing trend occur. Apparently, restricted by other factors of the Sample II, it is unable to effectively overcome restrictions of the frictional drag on the impingement force when the internal diameter of the fluid input channel 12 is smaller than 2.5 mm. Therefore, when the distance between the two limit positions of the connecting rod 30 is 2.2 mm and the volume of the fluid pump chamber 11 ranges from 120 mm³ to 130 mm³, the internal diameter of the fluid input channel 12 may be preferably above 2.5 mm.

As can be seen from the dashed line corresponding to the Sample III, when the internal diameter of the fluid input channel 12 increases, the impingement force also increases, and the change trend of the impingement force does not increase in equal proportion to the coefficient. For example, the internal diameter of the fluid input channel 12 shows a first trend in the range of 2.0 mm to 2.5 mm, and the fluid input channel 12 shows a second trend in the range of 2.5 mm to 3.0 mm, and it is not difficult to find that a growth amplitude of the second trend is greater than that of the first trend. Thus, it is to be found that when the internal diameter of the fluid input channel 12 is smaller than 2.5 mm, the impingement force has smaller growth amplitude, and when the internal diameter of the fluid input channel 12 is greater than 2.5 mm, the impingement force has greater growth amplitude. Moreover, in the Sample III, when the distance between the two limit positions of the connecting rod 30 is 2.4 mm and the volume of the fluid pump chamber 11 ranges from 155 mm³ to 165 mm³, the frictional drag of the fluid input channel 12 below 2.5 mm can be overcome. Therefore, under the parameters of the connecting rod 30 and the fluid pump chamber 11 in the Sample III, there is no need to consider the frictional drag of the fluid input channel 12.

As can be seen from the comparison between the solid line corresponding to the Sample II and the dashed line corresponding to the Sample III in FIG. 11, under the same internal diameter of the fluid input channel 12, from the perspective of the distance between the two limit positions of the connecting rod 30 and the volume of the fluid pump chamber 11, although the two items of data of the Sample III are greater than the two items of data of the Sample II, when the internal diameter of the fluid input channel 12 ranges from 2.0 mm to 2.5 mm, the impingement force corresponding to the Sample III is smaller than the impingement force corresponding to the Sample II. Therefore, the impingement force of the Sample III is not always greater than the impingement force of the Sample II under the same internal diameter of the fluid input channel 12. That is, under the same internal diameter of the fluid input channel 12, values of the above two items of data do not increase in proportion to the coefficient. Therefore, it is required to properly select the internal diameter of the fluid input channel 12 corresponding to the Sample II and the Sample III to meet the requirements for the impingement force.

For example, as can be seen from FIG. 11, only when the internal diameter of the fluid input channel 12 is greater than 2.5 mm, can the impingement force of the Sample II gradually meet the basic requirements for the impingement force. Therefore, without considering other variables, the internal diameter of the fluid input channel 12 corresponding to the Sample II is preferably greater than 2.5 mm.

FIG. 12 illustrates a schematic diagram of relationship between the flow rate of the fluid pump chamber per unit time and the internal diameter of the fluid input channel, where the solid line corresponds to the experimental data of the Sample II, and the dashed line corresponds to the experimental data of the Sample III. An analysis is made as follows.

As can be seen from the solid line corresponding to the Sample II, when the internal diameter of the fluid input channel 12 increases, the flow rate of the fluid pump chamber 11 per unit time may also increase, and the change trend of the flow rate of the fluid pump chamber 11 per unit time does not increase in equal proportion to the coefficient. For example, when the internal diameter of the fluid input channel 12 ranges from 2.0 mm to 2.5 mm, the flow rate of the fluid pump chamber 11 per unit time almost does not change. But in the range of 2.5 mm to 3.0 mm, the flow rate of the fluid pump chamber 11 per unit time shows a sudden increasing trend. So it is not difficult to see that, although the internal diameter of the fluid input channel 12 changes, the frictional drag of the fluid input channel 12 also decreases. However, only when the frictional drag of the fluid input channel 12 is reduced to a certain threshold, may this sudden increasing trend occur, which also confirms the analysis conclusion with respect to FIG. 11. Obviously, under the constraints of other factors of the Sample II, restrictions of the frictional drag on the impingement force cannot be effectively overcome when the internal diameter of the fluid input channel 12 is below 2.5 mm. Therefore, when the distance between the two limit positions of the connecting rod 30 is 2.2 mm and the volume of the fluid pump chamber 11 ranges from 120 mm³ to 130 mm³, the internal diameter of the fluid input channel 12 may be preferably above 2.5 mm.

As can be seen from the dashed line corresponding to the Sample III, when the internal diameter of the fluid input channel 12 increases, the flow rate of the fluid pump chamber 11 per unit time may also increase, and the change trend of the flow rate of the fluid pump chamber 11 per unit time does not increase in equal proportion to the coefficient. For example, the internal diameter of the fluid input channel 12 shows the first trend in the range of 2.0 mm to 2.5 mm, and the fluid input channel 12 shows the second trend in the range of 2.5 mm to 3.0 mm, and it is not difficult to find that the growth amplitude of the second trend is greater than that of the first trend. Thus it is to be found that when the internal diameter of the fluid input channel 12 is smaller than 2.5 mm, the flow rate of the fluid pump chamber 11 per unit time has smaller growth amplitude. When the internal diameter of the fluid input channel 12 is greater than 2.5 mm, the flow rate of the fluid pump chamber 11 per unit time has greater growth amplitude. As can be seen, there is a corresponding relationship between the flow rate of the fluid pump chamber 11 per unit time and the impingement force. Moreover, the distance between the two limit positions of the connecting rod 30 of the Sample III is 2.4 mm, the volume of the fluid pump chamber 11 ranges from 155 mm³ to 165 mm³, and the flow rate of the fluid pump chamber 11 per unit time in the Sample III can still show an increasing trend, which confirms the analysis conclusion of FIG. 11. The parameters of the fluid pump chamber 11 and the connecting rod 30 in the Sample III can overcome the frictional drag of the fluid input channel 12 below 2.5 mm. Therefore, there is no need to consider the frictional drag of the fluid input channel 12 under the parameters of the connecting rod 30 and the fluid pump chamber 11 in the Sample III.

As can be seen from the comparison between the solid line corresponding to the Sample II and the dashed line corresponding to the Sample III in FIG. 12, under the same internal diameter of the fluid input channel 12, from the perspective of the distance between the two limit positions of the connecting rod 30 and the volume of the fluid pump chamber 11, although the two items of data of the Sample III are greater than the two items of data of the Sample II, when the internal diameter of the fluid input channel 12 ranges from 2.0 mm to 2.5 mm, the flow rate of the fluid pump chamber 11 per unit time corresponding to the Sample III is smaller than the flow rate of the fluid pump chamber 11 per unit time corresponding to the Sample II, which confirms the analysis conclusion in FIG. 11. Therefore, it is required to properly select the internal diameter of the fluid input channel 12 corresponding to the Sample II and the Sample III to meet the requirements for the flow rate of the fluid pump chamber 11 per unit time and the impingement force.

Therefore, the internal diameter of the fluid input channel 12 needs to be properly selected according to the distance between the two limit positions of the connecting rod 30 and the volume of the fluid pump chamber 11 to meet the standard requirements for the impingement force.

Alternatively, the internal diameter of the fluid input channel 12 ranges from 2.0 mm to 3.0 mm. For example, the internal diameter of the fluid input channel 12 may be 2.0 mm, 2.1 mm, 2.2 mm... or 3.0 mm, the internal diameter of the fluid input channel 12 can meet the requirements for the impingement force, and the actual flow rate of the fluid output channel 13 per unit time can be controlled to achieve the objective of water saving. When the internal diameter of the fluid input channel 12 is smaller than 2.0 mm, the actual flow rate of the fluid output channel 13 per unit time is too small to meet the standard requirements for the impingement force. When the internal diameter of the fluid input channel 12 is greater than 3.0 mm, the standard requirements for the impingement force can be met, but the actual flow rate of the fluid output channel 13 per unit time is greater, and thus the objective of water saving cannot be achieved.

Preferably, the internal diameter of the fluid input channel 12 ranges from 2.5 mm to 3.0 mm. For example, the internal diameter of the fluid input channel 12 may be 2.5 mm, 2.6 mm, 2.7 mm, 2.8 mm, 2.9 mm or 3.0 mm, which can meet the requirements for the optimal cleaning power and improve the cleaning effects while saving water.

In one implementation manner of this embodiment, the displacement unit 40 is the diaphragm. The edge of the diaphragm is attached onto the side wall of the housing 10 in the second direction, and the end face of the diaphragm facing towards the first direction is enclosed by the side wall of the housing 10 in the first direction to form a volume-variable sealing space, which is the fluid pump chamber 11. The end face of the diaphragm facing towards the second direction is connected to the linkage unit 20, such that concave-convex deformation of the diaphragm may occur under the drive of the linkage unit 20, to change the volume of the fluid pump chamber 11, and to change the pressure inside the fluid pump chamber 11. Referring to FIG. 3, a description is made below by taking an example where the linkage unit 20 fits the connecting rod 30 with the eccentric wheel.

The eccentric wheel is positioned in the housing 10 and on the second direction opposite to the first direction of the diaphragm, where the eccentric wheel has a rotating shaft 21 deviating from its geometric center, and the eccentric wheel is configured to rotate around the rotating shaft 21. The rotating shaft 21 runs through the eccentric wheel and extends along the rotation axis of the eccentric wheel, and the rotation axis is parallel to and not coincident with the central axis of the eccentric wheel. The geometric center of the eccentric wheel is a central position, in a geometrical shape, of the eccentric wheel. Therefore, when rotating around the rotating shaft 21, the eccentric wheel performs an eccentric rotation.

The connecting rod 30 is positioned between the diaphragm and the eccentric wheel, where the first end of the connecting rod 30 is rotationally connected to the eccentric wheel, such that when the eccentric wheel rotates, the connecting rod 30 is driven to move to and fro along the direction perpendicular to the rotating shaft 21. The second end of the connecting rod 30 extends toward a direction deviating from the rotating shaft 21, i.e. the first direction and the second direction as shown in FIG. 3. The diaphragm moves to and fro along the first direction and the second direction. The first end of the connecting rod 30 may be used as a power input end, and driven by the eccentric wheel, the first end of the connecting rod 30 may rotate around a rotation center. The second end opposite to the first end may be used as a power output end, and the second end of the connecting rod 30 may perform the to-and-fro movement perpendicular to the rotating shaft 21.

The diaphragm is connected to the second end of the connecting rod 30 and extends into the fluid pump chamber 11. The diaphragm acts on the plane in the fluid pump chamber 11 and is parallel to the rotating shaft 21. During the to-and-fro movement of the connecting rod 30, the diaphragm recurrently increases and decreases the volume of the fluid pump chamber 11, such that the liquid in the fluid storage unit 50 of the oral cleaning appliance is pumped into the fluid pump chamber 11 through the fluid input channel 12, and the impingement fluid is supplied through the fluid output channel 13.

Specifically, a sealed space is jointly formed by the diaphragm, the side wall of the fluid pump chamber 11, the one-way valve of the fluid input channel 12, and the one-way valve of the fluid output channel 13. The concave-convex deformation of the diaphragm can change the volume of the sealed space, so the pressure inside the fluid pump chamber 11 also increases or decreases accordingly. When the pressure inside the fluid pump chamber 11 decreases, under the action of negative pressure, the liquid is pumped from the fluid storage unit 50 into the fluid pump chamber 11 through the fluid input channel 12. When the pressure inside the fluid pump chamber 11 increases, the liquid is discharged from the fluid pump chamber 11 through the fluid output channel 13 to form the impingement fluid. The fluid pump chamber 11 needs to suck the liquid and then discharge it, so a noncontinuous pulse water jet is formed in the fluid output channel 13, and a water hammer pressure of the pulse water jet is greater than a stagnation pressure of a continuous pulse water jet. In principle, the pulse water jet can produce huge transient energy by means of a water hammer action, which can increase the impingement force of the water flow and thus can improve the cleaning effects. Furthermore, compared with a continuous water flow, the pulse water jet can save water consumption, so the volume of the fluid storage unit can be reduced, and the product size can be reduced.

On this basis, the distance between the two limit positions of the connecting rod 30 is within the range of 2.1 mm to 2.6 mm, which is enough for the diaphragm to effectively carry out the concave-convex deformation to meet the requirements for the changes of the pressure inside the fluid pump chamber 11. In this way, the space in the housing 10 for supporting the movement of the connecting rod 30 can be reduced accordingly, and the design size of the housing 10 is reduced, and the product size is reduced. Using the technical solutions of this embodiment, the rotation of the eccentric wheel drives the diaphragm to move to and fro through the second end of the connecting rod 30, such that the fluid output channel 13 forms the pulse water jet, and the liquid consumption can be saved while the impingement force is guaranteed, so the demands for the liquid consumption can be met by using a smaller-sized fluid storage unit. Furthermore, the distance between the two limit positions of the connecting rod 30 ranges from 2.1 mm to 2.6 mm. Based on such setting, the space in the housing 10 for supporting the movement of the connecting rod 30 can be reduced, and the size of the housing 10 is reduced.

In another implementation manner of this embodiment, the displacement unit 40 is the piston. Different from the previous embodiment, the movement mode of the diaphragm is the concave-convex deformation, the inner wall of the housing 10 positioned in the first direction of the diaphragm needs to be designed to a corresponding concave surface, and the movement mode of the piston is that it can slide along the inner wall of the housing 10 through the edge. That is, when the end face of the piston facing towards the first direction is a plane, the inner wall of the housing 10 may be designed to be a plane. When the end face of the piston facing towards the first direction is a camber surface, the inner wall of the housing 10 may be designed to the corresponding concave surface. Compared with the diaphragm, the piston has stronger compression capacity, and is less prone to produce a gap. The end face of the piston facing towards the second direction is connected to the linkage unit 20, and movement principles of the piston are the same as those of the diaphragm, and thus a detailed description thereof is omitted here.

As shown in FIG. 1A and FIG. 2, an oral cleaning appliance is provided in this embodiment, which includes a holding shell 70, the fluid pumping unit mentioned above, the fluid storage unit 50, and a drive mechanism.

An end of the holding shell 70 is connected to a nozzle 80, the fluid pumping unit is arranged in the holding shell 70, and the nozzle 80 is communicated with the fluid output channel 13 of the fluid pumping unit. The fluid storage unit 50 is arranged in the holding shell 70, where a water outlet of the fluid storage unit 50 is communicated with the fluid input channel 12 of the fluid pumping unit. The drive mechanism is arranged in the holding shell 70, and the drive mechanism is configured to drive the eccentric wheel of the fluid pumping unit to rotate.

The oral cleaning appliance in this embodiment is an oral irrigator. The oral irrigator uses the impingement force of water flow to clean the teeth. On the basis of reducing the design size and water consumption of the above fluid pumping unit, the size of the fluid storage unit 50 can also be reduced accordingly, such that the design size of the holding shell 70 may be reduced to improve the user's experience.

In this embodiment, a diameter of the liquid outlet of the nozzle ranges from 0.6 mm to 0.65 mm. For example, the diameter of the liquid outlet of the nozzle may be 0.6 mm, 0.61 mm, 0.62 mm, 0.63 mm, 0.64 mm, or 0.65 mm.

In this embodiment, the drive mechanism includes the second drive member 60, and the revolution speed of the second drive member 60 ranges from 3500 rpm to 4500 rpm, within which the calculated flow rate of the fluid pump chamber 11 per unit time may be guaranteed. According to the equation Q_{fluid pump chamber} = nv, Q_{fluid pump chamber} ranges from 542 ml/min to 693 ml/min, and the K value can be satisfied to range from 2.93 to 3.75. It is to be noted that existence of the frictional drag may cause a certain proportional relationship between the calculated flow rate of the fluid pump chamber 11 per unit time and the flow rate of the nozzle 80 per unit time, and the greater the K value is, the smaller the flow rate of the nozzle per unit time is, and the more water can be saved.

In this embodiment, the volume of the fluid storage unit 50 ranges from 50 ml to 200 ml. Within this range, the amount of water stored in the fluid storage unit 50 is sufficient to meet the requirements for dental cleaning.

In this embodiment, the volume of the fluid storage unit 50 is 50 ml. The volume of the fluid storage unit 50 is related to volume, and reducing the volume of the fluid storage unit 50 is advantageous to reduce the size of the holding shell 70.

In this embodiment, the fluid storage unit 50 is arranged on a lower side of the fluid pumping unit, and is positioned at a bottom of the holding shell 70, and a lower side of the holding shell 70 is provided with a liquid injection port 51 communicated with the fluid storage unit 50. That is, the fluid storage unit 50 and the fluid pumping unit are arranged along an extension direction of the holding shell 70, such that the size of the holding shell 70 in a holding direction may be reduced, making it convenient for the user to easily grip the holding shell 70. The liquid injection port 51 is used to replenish the fluid storage unit 50 with the water, an end cover is movably arranged on the liquid injection port 51, and the water replenishing operation may be completed by opening the end cover.

As shown in FIG. 1A, in this embodiment, the oral cleaning appliance is a rinsing and brushing integrated oral cleaning appliance, and a brush head 90 is also provided at an end of the holding shell 70.

The rinsing and brushing integrated oral cleaning appliance may be a rinsing and brushing integrated oral irrigator, which combines the functions of an oral irrigator and an electric toothbrush, and can simultaneously clean the teeth and slits between the teeth. In this way, bacteria and food residues on the surface of the teeth and in the slits between the teeth can be effectively removed, to prevent oral problems and improve oral health. For example, impurities on the surface of the teeth can be peeled off by means of friction of the brush head 90, and the residues in the slits between the teeth can be impinged by means of the impingement force of the nozzle 80, to achieve good cleaning effects.

In the rinsing and brushing integrated oral cleaner provided in this embodiment, the fluid storage unit 50 is positioned at the bottom of the holding shell 70, and the brush head 90 is positioned at the top of the holding shell 70. As a result, gravity at the top of the holding shell 70 is smaller, and a center of gravity of the holding shell can always be positioned in a middle of the holding shell 70 as the amount of water in the fluid storage unit 50 decreases, which provides the user with a good sense of holding.

On the basis where the design size of the fluid pumping unit and the water consumption can be reduced, the size of the fluid storage unit 50 may also be reduced accordingly, and the weight of the rinsing and brushing integrated oral cleaner can also be reduced. The user's tooth brushing time is generally about two minutes, and an arm or finger sore and swollen sense is not to be felt because of holding the oral cleaner for a long time, which improves the user's using experience.

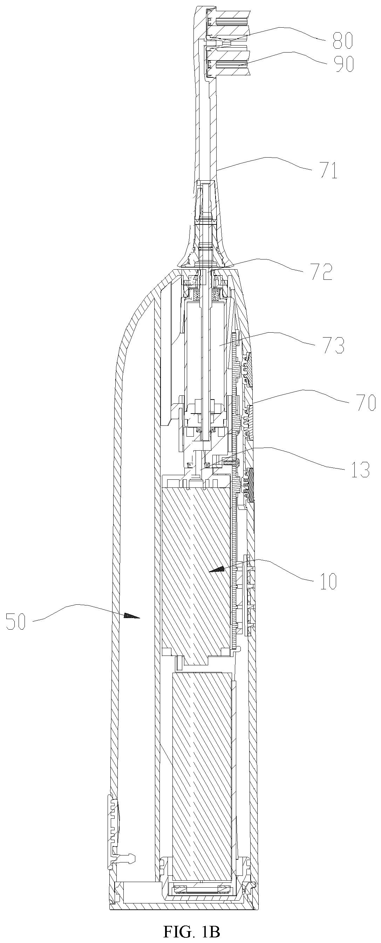

As shown in FIG. 1B and FIGS. 2 to FIG. 4, an oral cleaning appliance is provided according to the present disclosure, which includes a holding shell 70, a brush head 90, a fluid storage unit 50, a fluid pumping unit, and a drive unit.

The holding shell 70 is the holding part of the user when cleaning with the oral cleaning appliance. It houses most of the components that perform the cleaning function, such as the fluid storage unit, the fluid pumping unit, the drive unit, and other lines.

An end of the holding shell 70 is connected to a nozzle 80 and a brush head 90, where both the nozzle 80 and the brush head 90 are positioned on the same side of the end of the holding shell 70. The brush head 90 is provided with a plurality of contact element clusters comprising a plurality of contact elements, where the contact element may be brushes. The nozzle 80 is positioned among the plurality of contact element clusters. The nozzle 80 is connected to the fluid pumping unit to achieve the function of rinsing the slits between the teeth, and the brush head 90 is connected to the first drive member 73 in the holding shell to achieve the function of brushing the teeth. Therefore, the oral cleaning appliance provided in this embodiment not only can achieve the function of the electric toothbrush, but also can achieve the function of the oral irrigator, thereby improving the oral cleaning effects. The fluid storage unit 50 is arranged in the holding shell 70. A water pump chamber has a fluid input channel 12 communicated with the fluid storage unit 50, and a fluid output channel 13 communicated with the nozzle 80. The fluid pumping unit can pump the liquid from the fluid storage unit 50 into the nozzle 80 and eject it, thereby cleaning the teeth or slits between the teeth. The liquid may be water, mouthwash or oral care solution, etc. The fluid storage unit 50 is used to store the liquid.

The fluid pump chamber 11 is formed in the housing 10, where the fluid input channel 12 and the fluid output channel 13 are communicated with the fluid pump chamber 11. The fluid pump chamber 11 mainly uses changes of its internal pressure to achieve liquid inlet and liquid outlet, a one-way valve may be separately arranged on the fluid input channel 12 and the fluid output channel 13, where the one-way valve of the fluid input channel 12 allows the liquid to flow from the fluid storage unit to the fluid pump chamber 11, and the one-way valve of the fluid output channel 13 allows the liquid to flow from the fluid pump chamber 11 to the fluid output channel 13.

Further, when the pressure inside the fluid pump chamber 11 increases, the liquid in the fluid pump chamber 11 flows out of the nozzle 80 through the fluid output channel 13, and the one-way valve of the fluid input channel 12 prevents the liquid in the fluid pump chamber 11 from entering the fluid input channel 12. When the pressure inside the fluid pump chamber 11 decreases, the liquid in the fluid storage unit 50 enters the fluid pump chamber 11 through the fluid input channel 12, and the one-way valve of the fluid output channel 13 prevents the liquid in the fluid output channel 13 from flowing into the fluid pump chamber 11.

The displacement unit 40 is movably arranged in the housing 10, where an end face of the displacement unit 40 facing towards a first direction is enclosed by an inner wall of the housing 10 to form the fluid pump chamber 11 with a variable volume. In this embodiment, an edge of the displacement unit 40 may be attached onto the inner wall of the housing 10. In this way, the inner wall positioned in the first direction of the housing 10 can be enclosed by the diaphragm to form one chamber, which is the fluid pump chamber 11. The displacement unit 40 is movably arranged such that the volume of the fluid pump chamber 11 is variable. The fluid input channel 12 and the fluid output channel 13 are also positioned in the first direction and are communicated with the fluid pump chamber 11. Because of the arrangement of the one-way valve, when the volume of the fluid pump chamber 11 changes, the pressure inside the fluid pump chamber 11 may also increase or decrease, such that the liquid may be pumped from the fluid input channel 12 into the fluid pump chamber 11 by means of negative pressure, or the liquid may be pumped from the fluid pump chamber 11 to the fluid output channel 13 by means of pressure.

Referring to directions shown by dotted arrows in FIG. 3, bounded by the displacement unit 40, the fluid pump chamber 11 is formed in the first direction of the displacement unit 40, and the linkage unit 20 driving the displacement unit 40 to move is positioned in the second direction, which is opposite to the first direction. This setting is conducive to dry and wet separation, such that the liquid is prevented from entering movement space of the linkage unit 20, thereby avoiding causing adverse impacts on the linkage unit 20 and other electrical components.

The linkage unit 20 is arranged in the housing 10 and is in transmission connection with an end face of the displacement unit 40 facing towards the second direction, where the linkage unit 20 is configured to drive the displacement unit 40 to move to and fro along the first direction and the second direction, to recurrently increase and decrease the volume of the fluid pump chamber 11, such that the liquid in the fluid storage unit 50 is pumped into the fluid pump chamber 11 through the fluid input channel 12, and the impingement fluid is supplied through the fluid output channel 13.

Referring to the first direction and the second direction shown in FIG. 3, the displacement unit 40 moves to and fro along the first direction and the second direction. The displacement unit 40 extends into the fluid pump chamber 11, and the displacement unit 40 recurrently increases and decreases the volume of the fluid pump chamber 11, such that the liquid in the fluid storage unit 50 is pumped into the fluid pump chamber 11 through the fluid input channel 12, and the impingement fluid is supplied through the fluid output channel 13. The drive unit includes a first drive member 73 arranged in the holding shell 70 and a second drive member 60. The first drive member 73 is configured to drive the brush head 90 to swing left and right to clean a tooth. The second drive member 60 is connected to the linkage unit 20, and is configured to drive the linkage unit 20 to drive the displacement unit 40 to move to and fro. For example, the first drive member 73 may be a vibration motor, and is configured to drive the brush head 90 to vibrate, to achieve the functions of the electric toothbrush. The displacement unit 40 has two limit positions during the to-and-fro movement along the first direction and the second direction, where the distance between the two limit positions ranges from 2.1 mm to 2.6 mm, and the volume of the fluid pump chamber 11 ranges from 120 mm³ to 165 mm³.

Specifically, a sealed space is jointly formed by the displacement unit 40, the side wall of the fluid pump chamber 11, the one-way valve of the fluid input channel 12, and the one-way valve of the fluid output channel 13. The movement of the displacement unit 40 may change the volume of the sealed space, so the pressure inside the fluid pump chamber 11 also increases or decreases accordingly. When the pressure inside the fluid pump chamber 11 decreases, under the action of negative pressure, the liquid is pumped from the fluid storage unit 50 into the fluid pump chamber 11 through the fluid input channel 12. When the pressure inside the fluid pump chamber 11 increases, the liquid is discharged from the fluid pump chamber 11 through the fluid output channel 13 to form an impingement water flow. The fluid pump chamber 11 needs to suck the liquid and then discharge it, so a noncontinuous pulse water jet is formed in the fluid output channel 13, and a water hammer pressure of the pulse water jet is greater than a stagnation pressure of a continuous pulse water jet. In principle, the pulse water jet can produce huge transient energy by means of a water hammer action, which can increase the impingement force of the water flow and thus can improve the cleaning effects. Furthermore, compared with a continuous water flow, the pulse water jet can save water consumption, so the volume of the fluid storage unit can be reduced, and the product size can be reduced.

On this basis, the distance between the two limit positions of the displacement unit 40 is within the range of 2.1 mm to 2.6 mm, which is enough to meet requirements for changes of the pressure inside the fluid pump chamber 11. So the space in the housing 10 for supporting the movement of the linkage unit 20 can be reduced accordingly, and the design size of the housing 10 is reduced, and the product size is reduced. Using the technical solutions of this embodiment, the linkage unit 20 drives the displacement unit 40 to move to and fro, such that the fluid output channel 13 forms the pulse water jet, and the liquid consumption can be saved while the impingement force is guaranteed, so demands for the liquid consumption can be met by using a smaller-sized fluid storage unit. Furthermore, the distance between the two limit positions of the displacement unit 40 ranges from 2.1 mm to 2.6 mm. Such setting reduces the space in the housing 10 for supporting the movement of the linkage unit 20 and the displacement unit 20, and reduces the size of the housing 10.

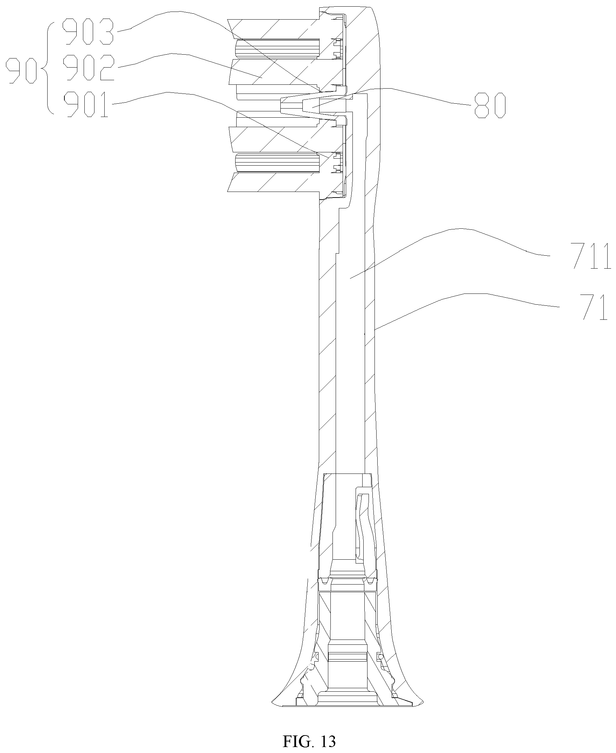

As shown in FIG. 1B, FIG. 13 and FIG. 14, in this embodiment, a top of the holding shell 70 is connected to a rinsing handle 71, the brush head 90 is mounted at an end of the rinsing handle 71, the rinsing handle 71 is internally provided with a fluid channel 711, and the nozzle 80 is mounted at the end of the rinsing handle 71 and is communicated with the fluid output channel 13 through the fluid channel 711.The fluid pump chamber 11 can pump the liquid into the fluid channel 711 through the fluid output channel 13, and the liquid can be sprayed out through the nozzle 80. The first drive member 73 has a power output shaft 72 extending out of the holding shell 70, and the rinsing handle 71 is connected to the power output shaft 72 and is controlled by the power output shaft 72 to perform a cleaning action. Driven by the first drive member 73, the power output shaft 72 can drive the rinsing handle 71 to vibrate, such that the brush head 90 on the top of the rinsing handle 71 swings synchronously to clean the surface of the teeth. In this way, the rinsing handle 71 not only can drive the brush head 90 to swing, but also can supply the liquid to the nozzle 80 through the fluid channel 711. Thus, the oral cleaning appliance in this embodiment not only has the tooth brushing function of the electric toothbrush, but also has the rinsing function of the oral irrigator, to improve the user's sense of experience and improve the cleaning effects of oral care equipment. Furthermore, the oral cleaning appliance has synchronous rinsing and brushing functions.

In this embodiment, the power output shaft 72 may be made of stainless steel, which may be steel 303 or steel 304, and the vibration motor can drive the power output shaft 72 to move to and fro with respect to the holding shell 70.

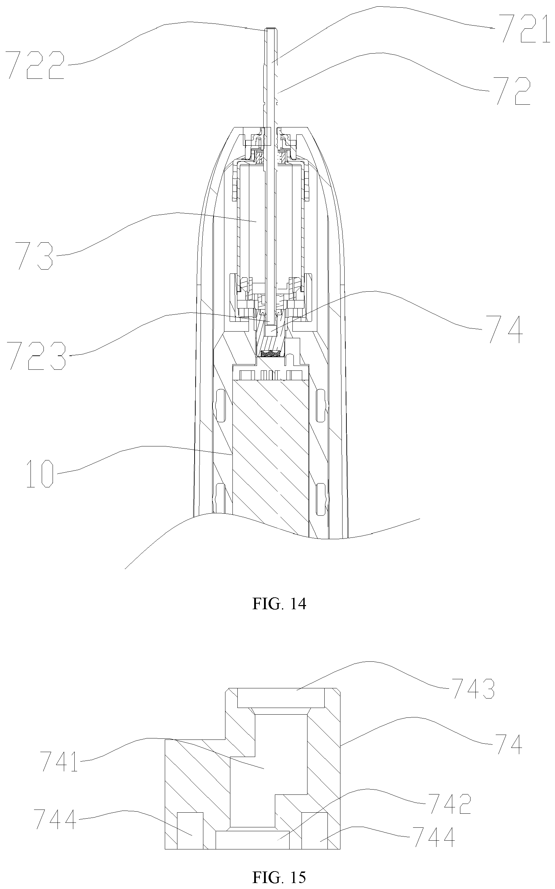

As shown in FIG. 14, in this embodiment, the first drive member 73 may be the vibration motor. The power output shaft 72 is a cylinder running through an upper end and a lower end of the first drive member 73 and has an axial channel 721, where the axial channel 721 has an outlet communicated with the fluid channel 711 and an inlet communicated with the fluid output channel 13. The cylinder has a hollow inner cavity, such that the power output shaft 72 forms the axial channel 721, an outlet 722, and an inlet 723. The liquid pumped out of the fluid output channel 13 enters the axial channel 721 through the inlet 723, and the liquid continues to flow from the outlet 722 into the fluid channel 711. Thus, the liquid can be directly transported by means of the axial channel 721 of the power output shaft 72, and there is no need to additionally provide the liquid pipeline communicated with the fluid channel 711 and the fluid output channel 13, which makes structural layout of the pipeline in the holding shell 70 more reasonable, and reduces the fluid pipeline and saves space. As a result, the size of the holding shell 70 can be further reduced, making it more convenient for the user to hold, making it more convenient for the user to operate, and thus improving the user's comfort in use.

In this embodiment, an inner wall of the axial channel 721 of the power output shaft 72 is smoothed. For example, smoothness of the inner wall of the axial channel 721 may be improved by means of a polishing process, which is advantageous to reduce resistance to water flow, thus ensuring to reduce loss of the impingement force of the water flow caused by the frictional drag, such that it may be ensured that the liquid emitted from the nozzle 80 has enough impingement force to clean the teeth or slits between the teeth.

To ensure that the power output shaft 72 has sufficient service life, Rockwell hardness (HRC) of the power output shaft 72 in this embodiment is ranged from 17 to 70, and a single side wall thickness is ranged from 0.3 mm to 1 mm. Based on a large number of experiments, it is found that there is an approximate corresponding relationship between hardness values and strength values of a material, and the hardness value is determined by plastic deformation resistance. The higher the strength of the material is, the higher the plastic deformation resistance is, and the higher the hardness value is. Generally, the higher the hardness of the material is, the better its wear resistance is, and the brittler the material is. Therefore, to ensure the hardness and toughness of the power output shaft 72 simultaneously, the hardness of the power output shaft 72 needs to be properly limited. By setting the hardness of the power output shaft 72 to be within the above range, it may be ensured that the hardness of the power output shaft 72 can satisfy requirements for power output of the vibration motor, which not only can effectively avoid the problem of plastic deformation caused by insufficient hardness of the power output shaft 72, but also can avoid the problem of excessive brittleness and easy fracture caused by higher hardness, such that the power output shaft 72 may still have good hardness and toughness after the axial channel 721 is provided. In this way, power output capacity and the service life and operating stability of the first drive member 73 can be ensured while fluid transmission is met.

Considering that when the power output shaft 72 moves to and fro under the drive of the first drive member 73, the axial channel 721 may also move to and fro, the axial channel 721 may swing with respect to the fluid output channel 13, and a relative position between the inlet 723 of the axial channel 721 and the fluid output channel 13 may change, resulting in a gap in a position of connection between the inlet 723 and the fluid output channel 13, which is not conducive for the inlet 723 and the fluid output channel 13 to form a stable liquid supply relationship.

To solve the above problems, as shown in FIG. 14 and FIG. 15, in this embodiment, a connector 74 is provided between the inlet 723 and the fluid output channel 13, where the connector 74 has a communication cavity 741, a first end 742 facing towards the fluid output channel 13, and a second end 743 facing towards the inlet 723. The fluid output channel 13 extends into the first end 742 of the connector 74, and the inlet 723 extends into the second end 743 of the connector 74.

The second end 743 and the first end 742 can form a stable connection with the inlet 723 and the fluid output channel 13, respectively, and there is no any gap at their respective positions of connection.

In another implementation manner, the second end 743 may swing with respect to the first end 742. When the power output shaft 72 moves, the liquid can also enter the axial channel 721 through the first end 742, the communication cavity 741 and the second end 743, such that a stable liquid supply relationship is formed between the second end 743 and the first end 742, and a stable liquid supply relationship is formed between the fluid output channel 13 and the axial channel 721, which overcomes the problem that the relative position between the axial channel 721 of the power output shaft 72 and the fluid output channel 13 may be changed.

The connector 74 may be integrally formed on the fluid output channel 13 and may be connected to the inlet 723 through the second end 743.

As shown in FIG. 15, in this embodiment, the connector 74 has an annular groove 744 arranged around the first end 742, where the annular groove 744 provides space for deformation of the connector 74, making it convenient for the second end 743 to swing with respect to the first end 742.

In this embodiment, the end of the rinsing handle 71 has a mounting groove 75, where the mounting groove 75 has a lug boss 751 formed in the mounting groove 75 and extending to an opening of the mounting groove 75. The lug boss 751 has a liquid outlet of the fluid channel 711, and the nozzle 80 is mounted on the lug boss 751. The nozzle 80 has an overflow aperture different from the liquid outlet, to improve the jet impingement force.

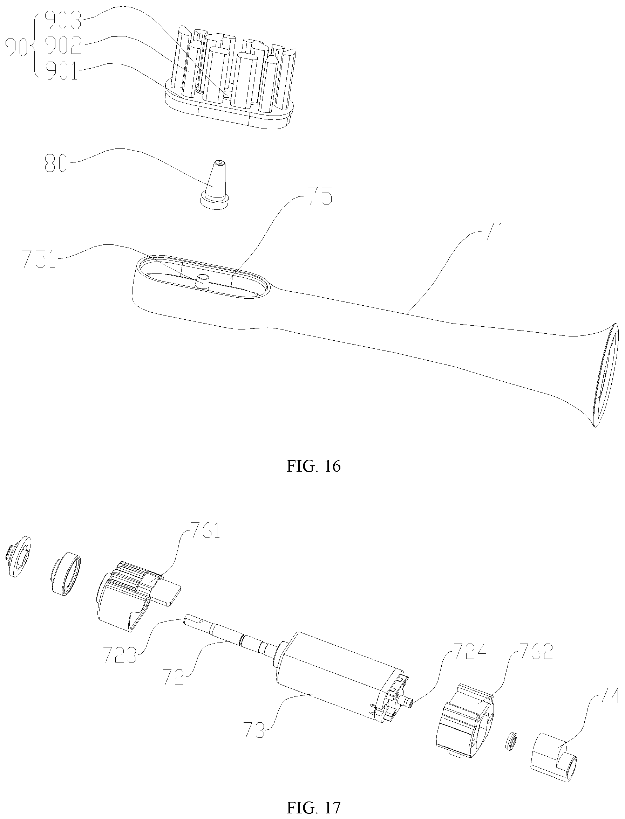

As shown in FIG. 16, in this embodiment, the brush head 90 includes a contact element carrier 901 mounted in the mounting groove 75, and a plurality of contact element clusters 902 spaced on the contact element carrier 901. The contact element carrier 901 is provided with a hole 903 fitting in shape to the nozzle 80. The hole 903 may allow the nozzle 80 to stretch out, and the plurality of contact element clusters 902 and the nozzle 80 may be positioned on the same side of the rinsing handle 71, making it easy to simultaneously clean the teeth using the functions of the toothbrush and the oral irrigator.

In this embodiment, an end of the nozzle 80 connected to the liquid outlet has an annular lug boss, and the size of hole 903 is smaller than that of the annular lug boss, such that the nozzle 80 can be pressed onto the liquid outlet by the hole 903, to avoid the nozzle 80 from falling off due to the water flow pressure at the liquid outlet.

Of course, the nozzle 80 and the brush head 90 may also be integrally formed and mounted on the mounting groove 75.

When using the oral cleaning appliance provided in this embodiment, the user may grip the holding shell 70, where the nozzle 80 and the brush head 90 are aligned with corresponding positions of the teeth and the slits between the teeth. The nozzle 80 and the brush head 90 may be selected to clean the teeth or the slits between the teeth. The holding shell 70 serves as a main carrier for installation of the fluid pumping unit, the fluid storage unit 50, and the drive unit, etc. When the impingement force of the nozzle 80 can be guaranteed, by reducing the volume of the fluid storage unit 50 and the size of the housing 10, the size and the weight of the holding shell 70 are reduced to a great extent. Accordingly, the overall size and the weight of the oral cleaning appliance is reduced to a great extent, such that the user can easily use the oral cleaning appliance to clean mouth, thereby improving the user's using experience.

As shown in FIG. 17, in this embodiment, the holding shell 70 is also internally provided with a front shock pad 761 and a rear shock pad 762. The front shock pad 761 is sleeved at a front end of the first drive member 73, and the front end of the first drive member 73 is mounted in the holding shell 70 through the front shock pad 761. The rear shock pad 762 is sleeved at a rear end of the first drive member 73, and the rear end of the first drive member 73 is mounted in the holding shell 70 through the rear shock pad 762. The first drive member 73 matches with the holding shell 70 through the front shock pad 761 and the rear shock pad 762. By means of the front shock pad 761 and the rear shock pad 762, it may be allowed that the first drive member 73 does not directly come into contact with the holding shell 70. Therefore, shock absorption of the first drive member 73 can be achieved by means of shock absorption performance of the front shock pad 761 and the rear shock pad 762. Avoiding direct contact between the first drive member 73 and the holding shell 70 can effectively reduce vibration transmitted from the first drive member 73 to the holding shell 70, reduce the vibration felt by the user when gripping the holding shell 70, and reduce vibration noises, thereby improving the user's using experience. In this embodiment, the fluid storage unit 50 is arranged on the lower side of the fluid pumping unit, and is positioned at the bottom of the holding shell 70, and the lower side of the holding shell 70 is provided with a water injection port 51 communicated with the fluid storage unit 50. That is, the fluid storage unit 50 and the fluid pumping unit are arranged along an extension direction of the holding shell 70, such that the size of the holding shell 70 in a holding direction may be reduced, making it convenient for the user to easily grip the holding shell 70. The water injection port 51 is used to replenish the fluid storage unit 50 with the water, an end cover is movably arranged on the water injection port 51, and the water replenishing operation may be completed by opening the end cover. In the oral cleaning appliance provided in this embodiment, the fluid storage unit 50 is positioned at the bottom of the holding shell 70, and the brush head 90 is positioned at the top of the holding shell 70. As a result, the gravity at the top of the holding shell 70 is smaller, and the center of gravity of the holding shell can always be positioned in the middle of the holding shell 70 as the amount of water in the fluid storage unit 50 decreases, which provides the user with a good sense of holding.

In addition, the fluid storage unit 50 may also be arranged on a left or right side of the holding shell 70. The size of the fluid storage unit 50 along a width direction of the holding shell 70 may be reduced by increasing the size of the fluid storage unit 50 along a length direction of the holding shell 70, depending on the actual situation.

On the basis where the design size of the fluid pumping unit and the water consumption can be reduced, the size of the fluid storage unit 50 may also be reduced accordingly, and the weight of the oral cleaning appliance can also be reduced. The user's tooth brushing time is generally about two minutes, and an arm or finger sore and swollen sense is not to be felt because of holding the oral cleaning appliance for a long time, which improves the user's using experience.

In one implementation manner of this embodiment, the linkage unit 20 includes an eccentric wheel and a connecting rod 30.

The eccentric wheel is positioned in the housing 10 and on the second direction opposite to the first direction of the displacement unit 40. The eccentric wheel has a rotating shaft 21 deviating from its geometric center, and the rotating shaft 21 runs through the eccentric wheel and extends along a rotation axis of the eccentric wheel, where the rotation axis is parallel to and not coincident with a central axis of the eccentric wheel. The connecting rod 30 is positioned between the displacement unit 40 and the eccentric wheel, where a first end of the connecting rod 30 is rotationally connected to the eccentric wheel, such that when the eccentric wheel rotates, the connecting rod 30 is driven to move to and fro along a direction perpendicular to the rotating shaft 21. A second end of the connecting rod 30 extends toward a direction of the displacement unit 40 and is connected to the end face of the displacement unit 40 facing towards the second direction. During the to-and-fro movement of the connecting rod 30, the displacement unit 40 is driven to recurrently increase and decrease, with the same stroke as the connecting rod 30, the volume of the fluid pump chamber 11, such that water in the fluid storage unit 50 is pumped into the fluid pump chamber 11 through the fluid input channel 12, and the impingement fluid is supplied through the fluid output channel 13. The second end of the connecting rod 30 has two limit positions close to the rotating shaft 21 or far away from the rotating shaft 21 during the to-and-fro movement, where the distance between the two limit positions ranges from 2.1 mm to 2.6 mm.

Referring to directions shown by dotted arrows in FIG. 3, bounded by the displacement unit 40, the fluid pump chamber 11 is formed in the first direction of the displacement unit 40, and the connecting rod 30 driving the displacement unit 40 to move and the eccentric wheel are positioned in the second direction, which is opposite to the first direction. This setting is conducive to dry and wet separation, so the liquid is prevented from entering the movement space of the connecting rod 30 and the eccentric wheel, thereby avoiding causing adverse impacts on the linkage unit 20 and other electrical components.

The connecting rod 30 is arranged in the housing 10 and is in transmission connection with the end face of the displacement unit 40 facing towards the second direction, where the connecting rod 30 is configured to drive the displacement unit 40 to move to and fro along the first direction and the second direction, to recurrently increase and decrease the volume of the fluid pump chamber 11, such that the liquid in the fluid storage unit 50 is pumped into the fluid pump chamber 11 through the fluid input channel 12, and the impingement fluid is supplied through the fluid output channel 13.

The eccentric wheel is positioned in the housing 10 and on the second direction opposite to the first direction of the displacement unit 40, where the eccentric wheel has a rotating shaft 21 deviating from its geometric center, and the eccentric wheel is configured to rotate around the rotating shaft 21. The rotating shaft 21 runs through the eccentric wheel and extends along the rotation axis of the eccentric wheel, and the rotation axis is parallel to and not coincident with the central axis of the eccentric wheel. The geometric center of the eccentric wheel is a central position, in a geometrical shape, of the eccentric wheel. Therefore, when rotating around the rotating shaft 21, the eccentric wheel performs an eccentric rotation.

The connecting rod 30 is positioned between the displacement unit 40 and the eccentric wheel, where a first end of the connecting rod 30 is rotationally connected to the eccentric wheel, such that when the eccentric wheel rotates, the connecting rod 30 is driven to move to and fro along the direction perpendicular to the rotating shaft 21. A second end of the connecting rod 30 extends toward a direction deviating from the rotating shaft 21, i.e. the first direction and the second direction as shown in FIG. 3. The displacement unit 40 moves to and fro along the first direction and the second direction. The first end of the connecting rod 30 may be used as a power input end, and driven by the eccentric wheel, the first end of the connecting rod 30 may rotate around a rotation center. The second end opposite to the first end may be used as a power output end, and the second end of the connecting rod 30 may perform the to-and-fro movement perpendicular to the rotating shaft 21.

The displacement unit 40 is connected to the second end of the connecting rod 30 and extends into the fluid pump chamber 11. The displacement unit 40 acts on a plane in the fluid pump chamber 11 and is parallel to the rotating shaft 21. During the to-and-fro movement of the connecting rod 30, the displacement unit 40 recurrently increases and decreases the volume of the fluid pump chamber 11, such that the water in the fluid storage unit 50 of the oral cleaning appliance is pumped into the fluid pump chamber 11 through the fluid input channel 12, and the impingement water flow is supplied through the fluid output channel 13. Arranged in the holding shell 70, the drive mechanism includes the first drive member 73 and the second drive member 60, where the first drive member 73 is configured to drive the brush head 90 to swing left and right to clean the teeth, and the second drive member 60 is configured to drive the eccentric wheel to rotate around the rotation axis. For example, the first drive member 73 may be a vibration motor, which is configured to drive the brush head 90 to vibrate, to achieve the functions of the electric toothbrush. The second drive member 60 may be a servo motor, which is configured to drive the rotating shaft 21 to rotate, and drive the eccentric wheel, the connecting rod 30 and the displacement unit 40 to move to change the volume of the fluid pump chamber 11 to achieve the function of the oral irrigator. The second end of the connecting rod 30 has two limit positions close to the rotating shaft 21 or far away from the rotating shaft 21 during the to-and-fro movement, the distance between the two limit positions ranges from 2.1 mm to 2.6 mm, and the volume of the fluid pump chamber 11 ranges from 120 mm³ to 165 mm³.

On this basis, the distance between the two limit positions of the connecting rod 30 is in the range of 2.1 mm to 2.6 mm, which is enough for the displacement unit 40 to meet the requirements for changes of the pressure inside the fluid pump chamber 11. So the space in the housing 10 for supporting the movement of the connecting rod 30 can be reduced accordingly, and the design size of the housing 10 is reduced, and the product size is reduced. Using the technical solutions of this embodiment, the rotation of the eccentric wheel drives the displacement unit 40 to move to and fro through the second end of the connecting rod 30, such that the fluid output channel 13 forms the pulse water jet, and the liquid consumption can be saved while the impingement force is guaranteed, so demands for the liquid consumption can be met by using a smaller-sized fluid storage unit. Furthermore, the distance between the two limit positions of the connecting rod 30 ranges from 2.1 mm to 2.6 mm. Based on such setting, the space in the housing 10 for supporting the movement of the connecting rod 30 can be reduced, and the size of the housing 10 is reduced. The second drive member 60 is a brushless motor arranged in the holding shell 70, the rotating shaft 21 is an output shaft of the brushless motor, and a revolution speed of the brushless motor ranges from 3500 rpm to 4500 rpm. The brushless motor has excellent torque characteristics and a wide revolution speed range, so there is no need to additionally provide a gearbox, which further simplifies the structure and reduces the size of the holding shell 70.

As shown in FIG. 3, the dotted arrows indicate effective movement directions of the connecting rod 30. That is, the connecting rod 30 is required to move to and fro along the first direction and the second direction, and the two limit positions of the connecting rod 30 are positioned in the first direction and the second direction, respectively. The connecting rod 30 moves to the limit position in the first direction, and the displacement unit 40 discharges the liquid from the fluid pump chamber 11. The connecting rod 30 moves to the limit position in the second direction, and there exists a maximum distance between the displacement unit 40 and the fluid pump chamber 11 on the opposite side, which reduces the pressure inside the fluid pump chamber 11, such that the fluid enters the fluid pump chamber 11 from the fluid input channel 12.

As shown in FIG. 3 and FIG. 4, the edge of the displacement unit 40 is fixed on the side wall of the fluid pump chamber 11, the displacement unit 40 may be connected to the second end of connecting rod 30 by means of a screw, and the displacement unit 40 and the screw may be formed by means of integrated injection molding, thereby simplifying the structure and reducing difficulty of assembly.

As shown in FIG. 3 and FIG. 4, the housing 10 has a cavity for accommodating the eccentric wheel, the second drive member 60 is positioned at the bottom of the housing 10, where the output shaft of the second drive member 60 is extended into the cavity and is coupled with the eccentric wheel to form the rotating shaft 21, and the second drive member 60 can drive the eccentric wheel to rotate by means of the rotating shaft 21. For example, shaft knurling may be provided on the rotating shaft 21, and the eccentric wheel is pressed onto the shaft knurling. The shaft knurling can increase the friction between the rotating shaft 21 and the eccentric wheel to ensure that the rotating shaft 21 can smoothly drive the eccentric wheel to rotate. A shaft seat is arranged in the cavity, and an end of the output shaft of the second drive member 60 may be extended into the shaft seat to improve stability of rotation of the output shaft. In addition to providing space for accommodating the above parts, the cavity also needs to provide a certain movement space for the rotation of the eccentric wheel and the to-and-fro movement of the first end of the connecting rod 30. Setting the distance between the two limit positions of the connecting rod 30 to 2.1 mm to 2.6 mm can limit the size of the movement space in the cavity, and can reduce the overall design size of the housing 10 on this basis.

A large number of experimental data demonstrate that when the distance between the two limit positions of the connecting rod 30 is smaller than 2.1 mm, the pumping force may be weakened, so the pumped water flow is insufficient and thus cannot meet the requirements of the fluid for the impingement force. However, when the distance between the two limit positions of the connecting rod 30 is greater than 2.6 mm, the design size of the cavity is too large to meet the requirements for reducing the overall design size of the housing 10. Therefore, the distance between the two limit positions of the connecting rod 30 is set between 2.1 mm and 2.6 mm. For example, the distance between the two limit positions of the connecting rod 30 may be 2.1 mm, 2.2 mm, 2.3 mm, 2.4 mm, 2.5 mm or 2.6 mm.

In this embodiment, the first end of the connecting rod 30 is coincident with the geometric center of the eccentric wheel with respect to the rotation center of the eccentric wheel, and an eccentric distance of the eccentric wheel ranges from 1.05 mm to 1.3 mm. When the first end of the connecting rod 30 is coincident with the geometric center of the eccentric wheel with respect to the rotation center of the eccentric wheel, a movement stroke of the second end of the connecting rod is twice the eccentric distance of the eccentric wheel, and the eccentric distance of the eccentric wheel is set in the range of 1.05 mm to 1.3 mm. In this way, it may be ensured that the distance between the two limit positions of the connecting rod 30 ranges from 2.1 mm to 2.6 mm.

As shown in FIG. 4 and FIG. 5, in this embodiment, a cross section shape of the eccentric wheel perpendicular to the rotating shaft 21 is configured as a circle, and the first end of the connecting rod 30 is provided with a sleeve hole, where an axis of the sleeve hole is parallel to the rotating shaft 21, and the sleeve hole is arranged outside the eccentric wheel. The eccentric wheel is provided with a shaft hole 201 that fits with the rotating shaft 21, the eccentric wheel is shaped like a circle, and the sleeve hole may also be shaped like a circle, thereby reducing the friction between the eccentric wheel and the first end of the connecting rod 30, to ensure that the first end of the connecting rod 30 fits with an outer edge of the eccentric wheel to perform the circular to-and-fro movement through the sleeve hole. The eccentric wheel rotates 360° around the rotating shaft 21, which is deemed as a complete stroke of the connecting rod 30. The first end of the connecting rod 30 performs the circular to-and-fro movement, which is more conducive to controlling the distance between the two limit positions of the connecting rod 30 to be between 2.1 mm and 2.6 mm, to ensure that the displacement unit 40 can provide a stable pressure difference.

To further reduce the friction between the eccentric wheel and the sleeve hole, a bearing 22 may be arranged between the eccentric wheel and the connecting rod 30, where the bearing 22 is sleeved on the eccentric wheel, and the sleeve hole is sleeved on the bearing 22. The bearing 22 can reduce the friction between the eccentric wheel and the connecting rod 30, to prevent the eccentric wheel from driving the connecting rod to coaxially rotate. In this way, it is ensured that the connecting rod 30 may perform the circular to-and-fro movement along the direction perpendicular to the rotating shaft 21.

Because a barycenter of the eccentric wheel is not positioned on the axis of the rotating shaft 21, an unbalanced centrifugal force may be generated during the rotation of the eccentric wheel, and an unbalanced torque generated increases a burden on the output shaft of the second drive member 60, which not only increases a friction resistance of an axis cylinder, but also increases heat generation.

To solve the above problems, as shown in FIG. 5, FIG. 6 and FIG. 7, in this embodiment, the eccentric wheel is connected to a balance block 23, where the balance block 23 is configured to increase weight of the rotating shaft 21 of the eccentric wheel to balance a torque of the eccentric wheel during rotation. Specifically, two opposite ends of the balance block 23 have different weights, one end having a larger weight is arranged on a top of the shaft hole 201, where the shaft hole 201 extends until it runs through the end face of the balance block 23, and the other end having a smaller weight is arranged on a top at an opposite side of the shaft hole 201. Such arrangement can increase mass of a side of the rotating shaft 21, such that taking the rotating shaft 21 as a center, two opposite sides of the eccentric wheel have equal or proximate weight. In this case, when the eccentric wheel rotates, the centrifugal force is equal at two ends of the eccentric wheel, thus solving the problem of unbalanced centrifugal forces at the two ends of the eccentric wheel. In this way, the torque of the output shaft of the second drive member 60 is balanced, such that the rotation of the output shaft of the second drive member 60 is more stable, which not only decreases the friction resistance of the axis cylinder, but also decreases the heat generation. In addition, by arranging the balance block 23 on the top of the eccentric wheel, occurrence of movement interference between the balance block 23 and the connecting rod 30 can be avoided, thereby avoiding causing interference with transmission between the eccentric wheel and the connecting rod 30.

In one specific implementation manner of this embodiment, the cross section of the balance block 23 may be a symmetric figure.For example, the dashed line shown in FIG. 6 and FIG. 7 is a symmetry axis of the balance block 23. In this way, introduction of a new unbalance force may be avoided. Specifically, taking the direction shown in FIG. 7 as an example, the shape of the balance block 23 is roughly as below. The shape has two curved sides in left and right directions, where a length of the left curved side is shorter than that of the right curved side; and the shape has two sloping sides in upper and lower directions, where the sloping sides are inclined outward towards the right arc. This leads to a fact that a right-side size of the balance block 23 is greater than a left-side size thereof, and that a right-side weight of the balance block 23 is greater than a left-side weight thereof based on average density of the balance block 23. The centrifugal forces on the left and right sides of the eccentric wheel during rotation are balanced in turn.

Of course, the structure of the balance block 23 may also be adjusted adaptively, as long as the weight of the shaft hole 201 of the eccentric wheel is increased.

In this embodiment, the eccentric wheel and the balance block 23 are integrally formed to facilitate production and reduce assembly errors. The eccentric wheel also may be connected to the balance block 23 by means of a fastener, etc. For example, the balance block 23 is fixed onto the eccentric wheel by means of screws, which is convenient for subsequent adjustment or replacement of the balance block 23.

In another implementation manner of this embodiment, the second drive member 60 is a linear motor arranged in the holding shell 70, the linkage unit 20 is the output shaft of the linear motor, the stroke of the output shaft ranges from 2.1 mm to 2.6 mm, and the output shaft of the linear motor drives the displacement unit 40 to perform the to-and-fro movement, to provide a recurrently increased and decreased pressure to the fluid pump chamber 11.

In this embodiment, the volume of the fluid pump chamber 11 ranges from 120 mm³ to 165 mm³. The liquid discharge of the fluid output channel 13 per unit time is related to the volume of the fluid pump chamber 11. Specifically, the liquid discharge of the fluid output channel 13 per unit time increases with the increase of the volume of the fluid pump chamber 11. When the pipe diameter of the fluid output channel 13 remains unchanged, the impingement force of the liquid increases with the increase of the liquid discharge per unit time. A large number of experiments demonstrate that when the distance between the two limit positions of the connecting rod 30 ranges from 2.2 mm to 2.4 mm and the volume of the fluid pump chamber 11 is within the range of 120 mm³ to 165 mm³, the pressure inside the fluid output channel 13 not only can meet the requirements for the impingement force, but also can meet the requirements for saving water. When the volume of the fluid pump chamber 11 is smaller than 120 mm³, the liquid flow is too small to meet the requirements for the impingement force. However, when the volume of the fluid pump chamber 11 is greater than 165 mm³, although the requirements for the impingement force can be met, there is too much liquid discharge per unit time, this means that it may accelerate consumption of the liquid in the fluid storage unit 50, which results in failure to meet the requirements of cleaning time and thus has adverse impact on the cleaning effects.

Further preferably, in this embodiment, when the volume of the fluid pump chamber ranges from 120 mm³ to 130 mm³, the distance between the two limit positions of the connecting rod 30 during the to-and-fro movement is selected to be 2.2 mm.

For example, the volume of the fluid pump chamber 11 may be 120 mm³, 121 mm³, 122 mm³, 123 mm³..., or 130 mm³. As shown in FIG. 3, when the second end of the connecting rod 30 moves to the limit position in the first direction, the displacement unit 40 may be fully attached onto the side wall of the fluid pump chamber 11, such that the liquid is completely discharged from the fluid pump chamber 11. When the limit position is greater than 2.2 mm, this may cause occurrence of movement interference between the displacement unit 40 and the side wall of the fluid pump chamber 11 during the movement of the second end of the connecting rod 30 to the limit position in the first direction.

Further preferably, in this embodiment, when the volume of the fluid pump chamber ranges from 155 mm³ to 165 mm³, the distance between the two limit positions of the connecting rod 30 during the to-and-fro movement is selected to be 2.4 mm.

For example, the volume of the fluid pump chamber 11 may be 155 mm³, 156 mm³, 157 mm³, 158 mm³..., or 165 mm³. As shown in FIG. 3, when the second end of the connecting rod 30 moves to the limit position in the first direction, the displacement unit 40 may be fully attached onto the side wall of the fluid pump chamber 11, such that the liquid is completely discharged from the fluid pump chamber 11. If the limit position is smaller than 2.4 mm, this may cause existence of a gap between the displacement unit 40 and the side wall of the fluid pump chamber 11 when the second end of the connecting rod 30 moves to the limit position in the first direction, which reduces the operating efficiency of the fluid pump chamber 11.

In this embodiment, by optimizing each parameter of the fluid pumping unit, the fluid pumping unit is more liquid-saving while the cleaning power is ensured. Therefore, the size of the fluid storage unit of the oral cleaning appliance can be made smaller, which solves the contradiction between the product size and the cleaning power for the oral irrigators in the prior art.

Principle description of the movement of each component of the fluid pumping unit in this embodiment is made above, and basis for a value of each parameter for the fluid pumping unit in this embodiment is introduced in detail below.

I. The value of the distance between the two limit positions of the connecting rod 30 during the to-and-fro movement

To change the size of the oral cleaning appliance, it is required to give priority to a component having a larger volume in the oral cleaning appliance. At present, parameters having a direct impact on the size of the oral cleaning appliance at least include the volume of the fluid pumping unit and the volume of the fluid storage unit. The fluid pumping unit not only needs to provide accommodation space for each moving part, but also needs to provide movement space for each moving part, so the connecting rod 30 may be improved from the perspective of the accommodation space and the movement space. To select an optimal range of the distance between the two limit positions of the connecting rod 30 during the to-and-fro movement, in the case that only the distance between the two limit positions of the connecting rod 30 during the to-and-fro movement is changed while other parameters remain unchanged, referring to FIG. 8, applicants obtain experimental data of the following four groups of samples through experiments.

Sample I: the distance is 2.0 mm, the impingement force is 0.041 N to 0.062 N, and the time required for pumping out 200 ml liquid is 75 s to 89 s.

Sample II: the distance is 2.2 mm, the impingement force is 0.90 N to 0.98 N, and the time required for pumping out 200 ml liquid is 54 s to 68 s.

Sample III: the distance is 2.4 mm, the impingement force is 0.107 N to 0.114 N, and the time required for pumping out 200 ml liquid is 47 s to 49 s.

Sample IV: the distance is 2.6 mm, the impingement force is 0.127 N to 0.130 N, and the time required for pumping out 200 ml liquid is 40 s to 43 s.

The greater the impingement force is, the stronger the cleaning power is; and the smaller the impingement force is, the weaker the cleaning power is. The shorter the time required for pumping out 200 ml water is, the more water is consumed; and the longer the time required for pumping out 200 ml water is, the less water is consumed. As can be seen from the above experimental data, the stronger the cleaning power is, the more water is consumed, so the two conditions need to be balanced.

Further, as the distance between the two limit positions of the connecting rod 30 increases during the to-and-fro movement, concave-convex deformation capacity of the displacement unit 40 may increase accordingly, which increases liquid intake and liquid discharge of the fluid pump chamber 11. The more the liquid discharge is, the stronger the impingement force of the fluid output channel 13 is. According to the experiments, it is found that the demands for oral cleaning have been met when the impingement force is ≥0.07 N. Therefore, the standard impingement force ≥0.07 N may be used as the basis in subsequent experiments for determining other design parameters.

In the Sample I, the time required for pumping out 200 ml liquid is longer, so the objective of saving the liquid may be achieved. However, the cleaning power does not meet the requirements, and thus the demands for oral cleaning cannot be met. Therefore, the Sample I is eliminated.

In the Sample IV, although the impingement force is stronger, the time required for pumping out 200 ml liquid is too short, which likely cannot meet the cleaning time once. Therefore, the Sample IV is eliminated.

In the Sample II and the Sample III, the impingement force is sufficient, and the time required for pumping out 200 ml liquid is relatively reasonable. Therefore, the Sample II and the Sample III are retained.

To sum up, in this embodiment, the distance between the two limit positions of the connecting rod 30 during the to-and-fro movement is finally determined to be between 2.2 mm and 2.4 mm. Within this range, the liquid discharge per unit time can be satisfied, and the requirements for the standard impingement force can be met. Furthermore, the liquid discharge per unit time can be controlled within a certain range. Thus, it is not required to increase the volume of the fluid storage unit 50. Specifically, when the distance between the two limit positions of the connecting rod 30 is smaller than 2.2 mm, this may lead to insufficient liquid flow and thus cannot meet the requirements for the impingement force of the fluid. When the distance between the two limit positions of the connecting rod 30 is greater than 2.4 mm, the design size of the cavity is too large to meet the requirements for reducing the overall design size of the housing 10. Furthermore, the liquid discharge per unit time may be increased, such that the fluid storage unit 50 having a larger volume is required to provide sufficient liquid storage.

### II. The value range of the volume of the fluid pump chamber 11

The volume of the fluid pump chamber 11 in this embodiment is related to the flow rate of the liquid discharged from the displacement unit 40 during a complete concave-convex deformation. Therefore, the volume of the fluid pump chamber 11 not only needs to satisfy requirements for the sufficient flow rate per unit time but also needs to satisfy requirements for conforming to the deformation stroke of the displacement unit 40. The flow rate of the fluid pump chamber 11 per unit time is related to the revolution speed of the second drive member. In this embodiment, the revolution speed n of the second drive member preferably ranges from 3500 rpm to 4500 rpm. When the revolution speed n of the second drive member is smaller than 3500 rpm, it is unable to guarantee that the calculated flow rate of the fluid pump chamber 11 per unit time meets the requirements. However, when the revolution speed n of the second drive member is greater than 4500 rpm, excessive noise may be generated. The flow rate of the fluid pump chamber 11 per unit time may be calculated by means of the following equation: Q_{fluid pump chamber} = nv, where Q_{fluid pump chamber} represents the flow rate of the fluid pump chamber 11 per unit time; n represents the revolution speed of the second drive member, that is, the revolution speed of the eccentric wheel; and v represents the volume of the fluid pump chamber 11. Based on the above equation, the flow rate of the fluid pump chamber 11 per unit time may be calculated, and a jet impingement force may be calculated by means of the equation F=10.2ρQ_{fluid pump chamber}²/A when a caliber of the fluid output channel 13 is unchanged, where F represents the jet impingement force, ρ represents density of a jet medium, which may be the liquid mentioned above. A may represent a cross-sectional area of a jet pipe, where the jet pipe at least includes the cross-sectional area of the fluid output channel 13, and a nozzle for oral cleaning.

Reference is made to the experimental data shown in FIG. 8.

In the Sample I, the distance is 2.0 mm, and the volume of the fluid pump chamber 11 ranges from 120 mm³ to 130 mm³. The time required for pumping out 200 ml liquid is longer, but the impingement force only ranges from 0.041 N to 0.062 N, which cannot meet the standard requirements for the impingement force. Therefore, the Sample I is eliminated. By comparing the Sample I and the Sample II, it is to be found that the volume of the fluid pump chamber 11 is not changed, but the distance in the Sample I is smaller, which is unable to ensure that the displacement unit 40 can maintain higher operating efficiency.

In the Sample IV, the distance is 2.6 mm, and the volume of the fluid pump chamber 11 ranges from 155 mm³ to 165 mm³. The Sample IV can meet the standard requirements for the impingement force. However, compared with the Sample III, the Sample III not only can meet the requirements for the impingement force, but also is more liquid-saving. Therefore, the Sample IV is eliminated.

FIG. 9 illustrates a schematic diagram of relationship between the impingement force and the distance between the two limit positions of the connecting rod, where the dashed line corresponds to the minimum impingement force and the solid line corresponds to the maximum impingement force. An analysis is made as follows.

It is to be noted that, considering that utilization rate of the fluid pump chamber 11 is restricted by the limit position of the connecting rod 30 and the volume of the fluid pump chamber 11, it is required to ensure that the utilization rate of the fluid pump chamber 11 is maintained at a higher level as far as possible. Major impact criteria are as below. In the process of completing a stroke by the connecting rod 30, based on a fact whether the displacement unit 40 can be fully attached onto the side wall when it moves to a limit distance along the direction of the fluid pump chamber 11, following four groups of data are obtained to ensure that the utilization rate of the fluid pump chamber 11 is at a higher level. For example, the distance between the two limit positions of the connecting rod 30 is 2.0 mm, and the volume of the fluid pump chamber is 120 mm³ to 130 mm³; the distance between the two limit positions of the connecting rod 30 is 2.2 mm, and the volume of the fluid pump chamber is 120 mm³ to 130 mm³; the distance between the two limit positions of the connecting rod 30 is 2.4 mm, and the volume of the fluid pump chamber is 155 mm³ to 165 mm³; and the distance between the two limit positions of the connecting rod 30 is 2.6 mm, and the volume of the fluid pump chamber is 155 mm³ to 165 mm³.

As can be seen from the dashed line in FIG. 9, the minimum impingement force does not increase in equal proportion as the distance between the two limit positions of the connecting rod 30 increases. When the distance between the two limit positions of the connecting rod 30 ranges from 2.0 mm to 2.2 mm, the change of the minimum impingement force shows a first increasing trend. When the distance between the two limit positions of the connecting rod 30 ranges from 2.2 mm to 2.4 mm, the change of the minimum impingement force shows a first decreasing trend. When the distance between the two limit positions of the connecting rod 30 ranges from 2.4 mm to 2.6 mm, the change of the minimum impingement force shows a second increasing trend. In the above data, there is difference in the volume of the fluid pump chamber 11, so it may be classified into following three cases.

In the first case, the volume of the fluid pump chamber 11 ranges from 120 mm³ to 130 mm³, and the distance between the two limit positions of the connecting rod 30 ranges from 2.0 mm to 2.2 mm. As the distance between the two limit positions of the connecting rod 30 increases, the impingement force also increases. This is because the increased distance between the two limit positions of the connecting rod 30 directly affects the utilization rate of the fluid pump chamber 11. That is, the stroke of the displacement unit 40 is increased, such that liquid intake capacity of the fluid pump chamber 11 is increased, which also directly affects the flow rate of the fluid pump chamber 11 per unit time, thereby increasing the impingement force.

In the second case, the volume of the fluid pump chamber 11 ranges from 155 mm³ to 165 mm³, and the distance between the two limit positions of the connecting rod 30 ranges from 2.4 mm to 2.6 mm. As the distance between the two limit positions of the connecting rod 30 increases, the impingement force also increases. This is because the increased distance between the two limit positions of the connecting rod 30 directly affects the utilization rate of the fluid pump chamber 11. That is, the stroke of the displacement unit 40 is increased, such that the liquid intake capacity of the fluid pump chamber 11 is increased, which also directly affects the flow rate of the fluid pump chamber 11 per unit time, thereby increasing the impingement force.

In the third case, the volume of the fluid pump chamber 11 ranges from 120 mm³ to 130 mm³, and the distance between the two limit positions of the connecting rod 30 is 2.2 mm. In addition, the volume of the fluid pump chamber 11 ranges from 155 mm³ to 165 mm³, and the distance between the two limit positions of the connecting rod 30 is 2.4 mm. From the perspective of change trend, although the volume of the fluid pump chamber 11 and the distance between the two limit positions of the connecting rod 30 increase, the minimum impingement force decreases. Thus, it is confirmed that the impingement force does not increase proportionally with the increase in the volume of the fluid pump chamber 11 and the distance between the two limit positions of the connecting rod 30.

As seen from the comparison between the first case and the second case, when the volume of the fluid pump chamber 11 is the same, as the distance between the two limit positions of the connecting rod 30 increases, the utilization rate of the fluid pump chamber 11 gradually increases, and the liquid discharge increases. In this case, the impingement force also gradually increases, and the first increasing trend is smaller than the second increasing trend. This indicates that when the volume of the fluid pump chamber 11 and the distance between the two limit positions of the connecting rod 30 increase, amplitude of increase in the impingement force is larger with the increase in the distance between the two limit positions of the connecting rod 30, which is easier to meet the requirements for a greater impingement force. Furthermore, this indicates that when the volume of the fluid pump chamber 11 and the distance between the two limit positions of the connecting rod 30 are smaller, it is easier to meet the requirements for a stable impingement force. As can be seen from the third case, in addition to the distance between the two limit positions of the connecting rod 30 and the volume of the fluid pump chamber 11, there are other factors affecting the impingement force.

As can be seen from the solid line in FIG. 9, as the distance between the two limit positions of the connecting rod 30 increases, the maximum impingement force does not increase in equal proportion. When the distance between the two limit positions of the connecting rod 30 ranges from 2.0 mm to 2.2 mm, the change of the maximum impingement force presents a third increasing trend. When the distance between the two limit positions of the connecting rod 30 ranges from 2.2 mm to 2.4 mm, the change of the maximum impingement force presents a fourth increasing trend. When the distance between the two limit positions of the connecting rod 30 ranges from 2.4 mm to 2.6 mm, the change of the maximum impingement force presents a fifth increasing trend. There are obvious differences between the third increasing trend, the fourth increasing trend, and the fifth increasing trend. FIG. 10 illustrates a schematic diagram of relationship between liquid pumping time and the distance between the two limit positions of the connecting rod, where the dashed line corresponds to minimum time, and the solid line corresponds to maximum time. An analysis is made as below.

As can be seen from the dashed line in FIG. 10, as the distance between the two limit positions of the connecting rod 30 increases, the minimum time does not show a proportionally decreasing trend. When the distance between the two limit positions of the connecting rod 30 ranges from 2.0 mm to 2.2 mm, the change of the minimum time shows a first decreasing trend. When the distance between the two limit positions of the connecting rod 30 ranges from 2.2 mm to 2.4 mm, the change of the minimum time shows a first rising trend. When the distance between the two limit positions of the connecting rod 30 ranges from 2.4 mm to 2.6 mm, the change of the minimum time shows a second decreasing trend. The shorter the liquid pumping time is, the greater the actual flow rate of the fluid pump chamber 11 per unit time is, the more liquid is consumed, which may be classified into the following three cases.

In the first case, the volume of the fluid pump chamber 11 is between 120 mm³ and 130 mm³, and the distance between the two limit positions of the connecting rod 30 ranges from 2.0 mm to 2.2 mm. As the distance between the two limit positions of the connecting rod 30 increases, the minimum time becomes shorter. Corresponding to the above analysis results in FIG. 9, the impingement force also increases. It is not difficult to determine that as the distance between the two limit positions of the connecting rod 30 increases, the flow rate of the fluid pump chamber 11 per unit time also increases, thus increasing the impingement force, which confirms the above analysis.

In the second case, the volume of the fluid pump chamber 11 is between 155 mm³ and 165 mm³, and the distance between the two limit positions of the connecting rod 30 ranges from 2.4 mm to 2.6 mm. As the distance between the two limit positions of the connecting rod 30 increases, the minimum time becomes shorter. Corresponding to the above analysis results in FIG. 9, the impingement force also increases. It is not difficult to determine that as the distance between the two limit positions of the connecting rod 30 increases, the flow rate of the fluid pump chamber 11 per unit time also increases, thus increasing the impingement force, which confirms the above analysis.

In the third case, the volume of the fluid pump chamber 11 ranges from 120 mm³ to 130 mm³, and the distance between the two limit positions of the connecting rod 30 is 2.2 mm; and the volume of the fluid pump chamber 11 ranges from 155 mm³ to 165 mm³, and the distance between the two limit positions of the connecting rod 30 is 2.4 mm. From the perspective of change trend, although the volume of the fluid pump chamber 11 and the distance between the two limit positions of the connecting rod 30 increase, the minimum time becomes longer, which corresponds to the analysis in FIG. 9, and the minimum impingement force is decreased. Thus, the above analysis is confirmed.

As can be seen from the solid line in FIG. 9, the maximum time does not decrease in equal proportion as the distance between the two limit positions of the connecting rod 30 increases. When the distance between the two limit positions of the connecting rod 30 ranges from 2.0 mm to 2.2 mm, the change of the maximum time shows a third decreasing trend. When the distance between the two limit positions of the connecting rod 30 ranges from 2.2 mm to 2.4 mm, the change of the maximum time shows a fourth decreasing trend. When the distance between the two limit positions of the connecting rod 30 ranges from 2.4 mm to 2.6 mm, the change of the maximum time shows a fifth decreasing trend. There is an obvious difference between the third decreasing trend, the fourth decreasing trend, and the fifth decreasing trend.

As can be seen from the above two analysis processes, the water discharge of the fluid pump chamber 11 per unit time has become a factor affecting the impingement force. On the whole, when the volume of the fluid pump chamber 11 is within a smaller range, it is required to ensure that the distance between the two limit positions of the connecting rod 30 meets the requirements to ensure that the fluid pump chamber 11 has sufficient efficiency. Furthermore, the volume of the fluid pump chamber 11 should not be too small, to ensure that there is enough liquid discharge to meet the requirements for the impingement force. When the volume of the fluid pump chamber 11 is within a greater range, it is required to properly control the distance between the two limit positions of the connecting rod 30 to control the actual flow rate of the fluid pump chamber 11 per unit time to meet the requirements for liquid saving.

Therefore, when the volume of the fluid pump chamber 11 is smaller than 120 mm³, this may lead to insufficient liquid discharge, and it is unable to meet the standard requirements for the impingement force if a cross-sectional area of the liquid discharge is not changed. When the volume of the fluid pump chamber 11 is greater than 165 mm³, this may lead to excessive liquid discharge per unit time. Although the standard requirements for the impingement force can be met, this may accelerate consumption of the liquid stored in the fluid storage unit 50. Demands for liquid consumption can be met by increasing the volume of the fluid storage unit 50, which may, however, undoubtedly increase the overall size of the oral cleaning appliance. Therefore, when the volume of the fluid pump chamber 11 is within the range of 120 mm³ to 165 mm³, the standard requirements for the impingement force can be met, and the flow rate of the fluid pump chamber 11 per unit time can be controlled, thereby achieving the objective of saving the liquid, to reduce the volume of the fluid storage unit 50.

Because the distance between two limit deformation strokes of the displacement unit 40 corresponds to the distance between the two limit positions of the connecting rod 30 during the movement, under the premise of ensuring the maximum efficiency of the fluid pump chamber 11, it may be classified into at least two cases as below.

In the first case, when the distance between the two limit positions of the connecting rod 30 during the to-and-fro movement is 2.2 mm, the volume of the fluid pump chamber 11 ranges from 120 mm³ to 130 mm³. As shown in FIG. 3, when the second end of the connecting rod 30 moves to the limit position in the first direction, the displacement unit 40 may be fully attached onto the side wall of the fluid pump chamber 11, such that the liquid is completely discharged from the fluid pump chamber 11, to achieve the maximum efficiency of the fluid pump chamber 11. If the volume of the fluid pump chamber 11 is greater than 130 mm³, when the second end of the connecting rod 30 moves to the limit position in the first direction, there may be a gap between the displacement unit 40 and the side wall of the fluid pump chamber 11, which reduces the efficiency of the fluid pump chamber 11.

In the second case, when the distance between the two limit positions of the connecting rod 30 during the to-and-fro movement is 2.4 mm, the volume of the fluid pump chamber 11 ranges from 155 mm³ to 165 mm³. As shown in FIG. 3, when the second end of the connecting rod 30 moves to the limit position in the first direction, the displacement unit 40 may be fully attached onto the side wall of the fluid pump chamber 11, such that the liquid is completely discharged from the fluid pump chamber 11, to achieve the maximum efficiency of the fluid pump chamber 11. When the volume of the fluid pump chamber 11 is smaller than 155 mm³, interference between the side wall of the fluid pump chamber 11 and the displacement unit 40 may likely occurs, resulting in a consequence that the displacement unit 40 is unable to complete the deformation stroke with a limit distance of 2.4 mm.

In this embodiment, a ratio of a calculated flow rate of the fluid pump chamber per unit time to an actual flow rate of the fluid output channel per unit time may satisfy the following equation: K = Q_{fluid pump chamber}/O_{fluid output channel};, where K represents the ratio of the calculated flow rate of the fluid pumping unit per unit time to the actual flow rate of the fluid output channel per unit time, and K is in the range of 2.93≤K≤3.75, Q_{fluid pump chamber} represents the calculated flow rate of the fluid pump chamber per unit time, and Q_{fluid output channel} represents the actual flow rate of the fluid output channel per unit time. That is, the actual flow rate per unit time may be determined by measuring the actual liquid discharge of the fluid output channel 13.

Based on a large number of experimental data, it is found that the smaller the K value is, the more liquid flows out of the fluid output channel 13 per unit time, and the greater the impingement force is; and the greater the K value is, the less liquid flows out of the fluid output channel 13 per unit time, and the smaller the impingement force is. On the basis of the standard requirements for the impingement force, when the K value is greater than 3.75, the impingement force of the fluid output channel 13 cannot meet the standard requirements for the impingement force. When the K value is smaller than 2.93, although the standard requirements for the impingement force can be met, the actual flow rate per unit time may be increased, resulting in excessive liquid consumption, which cannot meet the requirements for liquid saving.

Further, a difference value between Q_{fluid pump chamber} and Q_{fluid output channel} is caused by a pressure loss caused by frictional drag applied to the liquid in a liquid pipeline. For example, in addition to the fluid input channel 12 and the fluid output channel 13 introduced in this embodiment, the liquid may also pass through an elbow, a tee, a reducer, a valve and so on after leaving the fluid storage unit 50 or before entering the nozzle 80. A flow state of the liquid may change dramatically. That is, cases such as diversion, acceleration, impingement, vortex and deformation may occur, which may cause the pressure loss, and thus may lead to failure of pumping the liquid into the fluid pump chamber 11 according to calculated data. Consequently, the liquid cannot be completely discharged from the fluid pump chamber 11 according to the calculated liquid discharge. In the experiments, the data may be recorded by means of the actual liquid discharge contained by an external container per unit time.

### III. The value range of the internal diameter of the fluid input channel 12

Principles of replenishing the fluid pump chamber 11 with the liquid are as below. The liquid in the fluid storage unit 50 is pumped into the fluid pump chamber 11 through the fluid input channel 12 by means of negative pressure. The internal diameter of the fluid input channel 12 may affect the frictional drag of the liquid. Based on a large number of experimental data, it is found that the smaller the internal diameter of the fluid input channel 12 is, the greater the frictional drag of the liquid is, the less liquid enters the fluid pump chamber 11, the smaller the actual flow rate of the fluid output channel 13 is, and the smaller the impingement force of the fluid is. It is also found that the larger the internal diameter of the fluid input channel 12 is, the smaller the frictional drag of the liquid is, the more liquid enters the fluid pump chamber 11, the greater the actual flow rate of the fluid output channel 13 is, and the greater the impingement force of the fluid is.

Reference is made to the experimental data shown in FIG. 8.

The Sample II: the distance is 2.2 mm, and the volume of the fluid pump chamber 11 ranges from 120 mm³ to 130 mm³. When the internal diameter of the fluid input channel 12 is 2.0 mm, the actual flow rate per unit time is 174 ml/min, and the impingement force is 0.067 N. When the internal diameter of the fluid input channel 12 is 2.5 mm, the actual flow rate per unit time is 182 ml/min, and the impingement force is 0.067N. When the internal diameter of the fluid input channel 12 is 3.0 mm, the actual flow rate per unit time is 235 ml/min, and the impingement force is 0.094 N. As can be seen from the above data, as the internal diameter of the fluid input channel 12 increases, the actual flow rate per unit time may also increase, and the impingement force may also increase. When the internal diameter of the fluid input channel 12 is 2.0 mm and 2.5 mm, the impingement force is 0.067 N, which has a value difference of 0.003 N from the standard impingement force. Impacts of 0.003 N on the cleaning effects may be ignored in actual use.

The Sample III: the distance is 2.4 mm, and the volume of the fluid pump chamber 11 ranges from 155 mm³ to 165 mm³. When the internal diameter of the fluid input channel 12 is 2.0 mm, the actual flow rate per unit time is 154 ml/min, and the impingement force is 0.06 N. When the internal diameter of the fluid input channel 12 is 2.5 mm, the actual flow rate per unit time is 185 ml/min, and the impingement force is 0.072N. When the internal diameter of the fluid input channel 12 is 3.0 mm, the actual flow rate per unit time is 286 ml/min, and the impingement force is 0.104 N. As can be seen from the above data, as the internal diameter of the fluid input channel 12 increases, the actual flow rate per unit time may also increase, and the impingement force may also increase.

FIG. 11 illustrates a schematic diagram of relationship between the impingement force and the internal diameter of the fluid input channel, where the solid line corresponds to the experimental data of the Sample II, and the dashed line corresponds to the experimental data of the Sample III. An analysis is made as follows.

As can be seen from the solid line corresponding to the Sample II, when the internal diameter of the fluid input channel 12 increases, the impingement force may also increase, and the change trend of the impingement force does not increase in equal proportion to a coefficient. For example, when the internal diameter of the fluid input channel 12 ranges from 2.0 mm to 2.5 mm, the impingement force hardly changes. However, in the range of 2.5 mm to 3.0 mm, the impingement force shows a sudden increasing trend. This is because there are many factors restricting the actual flow rate of the fluid input channel 12, such as the internal diameter of the fluid input channel 12, the distance between the two limit positions of the connecting rod 30, the volume of the fluid pump chamber 11, and the revolution speed of the second drive member, etc. In this embodiment, changing the internal diameter of the fluid input channel 12 is taken as an example. When the internal diameter of the fluid input channel 12 is changed, the frictional drag of the fluid input channel 12 also decreases. In this case, only when the frictional drag of the fluid input channel 12 decreases to a certain threshold, can the sudden increasing trend occur. Apparently, restricted by other factors of the Sample II, it is unable to effectively overcome restrictions of the frictional drag on the impingement force when the internal diameter of the fluid input channel 12 is smaller than 2.5 mm. Therefore, when the distance between the two limit positions of the connecting rod 30 is 2.2 mm and the volume of the fluid pump chamber 11 ranges from 120 mm³ to 130 mm³, the internal diameter of the fluid input channel 12 may be preferably above 2.5 mm.

As can be seen from the dashed line corresponding to the Sample III, when the internal diameter of the fluid input channel 12 increases, the impingement force may also increase, and the change trend of the impingement force does not increase in equal proportion to the coefficient. For example, the internal diameter of the fluid input channel 12 shows a first trend in the range of 2.0 mm to 2.5 mm, and the fluid input channel 12 shows a second trend in the range of 2.5 mm to 3.0 mm, and it is not difficult to find that a growth amplitude of the second trend is greater than that of the first trend. Thus, it is to be found that when the internal diameter of the fluid input channel 12 is smaller than 2.5 mm, the impingement force has smaller growth amplitude, and when the internal diameter of the fluid input channel 12 is greater than 2.5 mm, the impingement force has greater growth amplitude. Moreover, in the Sample III, when the distance between the two limit positions of the connecting rod 30 is 2.4 mm and the volume of the fluid pump chamber 11 ranges from 155 mm³ to 165 mm³, the frictional drag of the fluid input channel 12 below 2.5 mm can be overcome. Therefore, under the parameters of the connecting rod 30 and the fluid pump chamber 11 in the Sample III, there is no need to consider the frictional drag of the fluid input channel 12.

As can be seen from the comparison between the solid line corresponding to the Sample II and the dashed line corresponding to the Sample III in FIG. 11, under the same internal diameter of the fluid input channel 12, from the perspective of the distance between the two limit positions of the connecting rod 30 and the volume of the fluid pump chamber 11, although the two items of data of the Sample III are greater than the two items of data of the Sample II, when the internal diameter of the fluid input channel 12 ranges from 2.0 mm to 2.5 mm, the impingement force corresponding to the Sample III is smaller than the impingement force corresponding to the Sample II. Therefore, the impingement force of the Sample III is not always greater than the impingement force of the Sample II under the same internal diameter of the fluid input channel 12. That is, under the same internal diameter of the fluid input channel 12, values of the above two items of data do not increase in proportion to the coefficient. Therefore, it is required to properly select the internal diameter of the fluid input channel 12 corresponding to the Sample II and the Sample III to meet the requirements for the impingement force.

For example, as can be seen from FIG. 11, only when the internal diameter of the fluid input channel 12 is greater than 2.5 mm, can the impingement force of the Sample II gradually meet the basic requirements for the impingement force. Therefore, without considering other variables, the internal diameter of the fluid input channel 12 corresponding to the Sample II is preferably greater than 2.5 mm.

FIG. 12 illustrates a schematic diagram of relationship between the flow rate of the fluid pump chamber per unit time and the internal diameter of the fluid input channel, where the solid line corresponds to the experimental data of the Sample II, and the dashed line corresponds to the experimental data of the Sample III. An analysis is made as follows.

As can be seen from the solid line corresponding to the Sample II, when the internal diameter of the fluid input channel 12 increases, the flow rate of the fluid pump chamber 11 per unit time may also increase, and the change trend of the flow rate of the fluid pump chamber 11 per unit time does not increase in equal proportion to the coefficient. For example, when the internal diameter of the fluid input channel 12 ranges from 2.0 mm to 2.5 mm, the flow rate of the fluid pump chamber 11 per unit time almost does not change. But in the range of 2.5 mm to 3.0 mm, the flow rate of the fluid pump chamber 11 per unit time shows a sudden increasing trend. So it is not difficult to see that, although the internal diameter of the fluid input channel 12 changes, the frictional drag of the fluid input channel 12 also decreases. However, only when the frictional drag of the fluid input channel 12 is reduced to a certain threshold, may this sudden increasing trend occur, which also confirms the analysis conclusion with respect to FIG. 11. Obviously, under the constraints of other factors of the Sample II, restrictions of the frictional drag on the impingement force cannot be effectively overcome when the internal diameter of the fluid input channel 12 is below 2.5 mm. Therefore, when the distance between the two limit positions of the connecting rod 30 is 2.2 mm and the volume of the fluid pump chamber 11 ranges from 120 mm³ to 130 mm³, the internal diameter of the fluid input channel 12 may be preferably above 2.5 mm.

As can be seen from the dashed line corresponding to the Sample III, when the internal diameter of the fluid input channel 12 increases, the flow rate of the fluid pump chamber 11 per unit time may also increase, and the change trend of the flow rate of the fluid pump chamber 11 per unit time does not increase in equal proportion to the coefficient. For example, the internal diameter of the fluid input channel 12 shows the first trend in the range of 2.0 mm to 2.5 mm, and the fluid input channel 12 shows the second trend in the range of 2.5 mm to 3.0 mm, and it is not difficult to find that the growth amplitude of the second trend is greater than that of the first trend. Thus it is to be found that when the internal diameter of the fluid input channel 12 is smaller than 2.5 mm, the flow rate of the fluid pump chamber 11 per unit time has smaller growth amplitude. When the internal diameter of the fluid input channel 12 is greater than 2.5 mm, the flow rate of the fluid pump chamber 11 per unit time has greater growth amplitude. As can be seen, there is a corresponding relationship between the flow rate of the fluid pump chamber 11 per unit time and the impingement force. Moreover, the distance between the two limit positions of the connecting rod 30 of the Sample III is 2.4 mm, the volume of the fluid pump chamber 11 ranges from 155 mm³ to 165 mm³, and the flow rate of the fluid pump chamber 11 per unit time in the Sample III can still show an increasing trend, which confirms the analysis conclusion of FIG. 11. The parameters of the fluid pump chamber 11 and the connecting rod 30 in the Sample III can overcome the frictional drag of the fluid input channel 12 below 2.5 mm. Therefore, there is no need to consider the frictional drag of the fluid input channel 12 under the parameters of the connecting rod 30 and the fluid pump chamber 11 in the Sample III.

As can be seen from the comparison between the solid line corresponding to the Sample II and the dashed line corresponding to the Sample **III** in FIG. 12, under the same internal diameter of the fluid input channel 12, from the perspective of the distance between the two limit positions of the connecting rod 30 and the volume of the fluid pump chamber 11, although the two items of data of the Sample III are greater than the two items of data of the Sample II, when the internal diameter of the fluid input channel 12 ranges from 2.0 mm to 2.5 mm, the flow rate of the fluid pump chamber 11 per unit time corresponding to the Sample III is smaller than the flow rate of the fluid pump chamber 11 per unit time corresponding to the Sample II, which confirms the analysis conclusion in FIG. 11. Therefore, it is required to properly select the internal diameter of the fluid input channel 12 corresponding to the Sample II and the Sample III to meet the requirements for the flow rate of the fluid pump chamber 11 per unit time and the impingement force.

Therefore, the internal diameter of the fluid input channel 12 needs to be properly selected according to the distance between the two limit positions of the connecting rod 30 and the volume of the fluid pump chamber 11 to meet the standard requirements for the impingement force.

Alternatively, the internal diameter of the fluid input channel 12 ranges from 2.0 mm to 3.0 mm. For example, the internal diameter of the fluid input channel 12 may be 2.0 mm, 2.1 mm, 2.2 mm... or 3.0 mm, the internal diameter of the fluid input channel 12 can meet the requirements for the impingement force, and the actual flow rate of the fluid output channel 13 per unit time can be controlled to achieve the objective of saving the liquid. When the internal diameter of the fluid input channel 12 is smaller than 2.0 mm, the actual flow rate of the fluid output channel 13 per unit time is too small to meet the standard requirements for the impingement force. When the internal diameter of the fluid input channel 12 is greater than 3.0 mm, the standard requirements for the impingement force can be met, but the actual flow rate of the fluid output channel 13 per unit time is greater, and thus the objective of saving the liquid cannot be achieved.

Preferably, the internal diameter of the fluid input channel 12 ranges from 2.5 mm to 3.0 mm. For example, the internal diameter of the fluid input channel 12 may be 2.5 mm, 2.6 mm, 2.7 mm, 2.8 mm, 2.9 mm or 3.0 mm, which can meet the requirements for the optimal cleaning power and improve the cleaning effects while saving the liquid.

In this embodiment, the diameter of the fluid outlet of the nozzle ranges from 0.6 mm to 0.65 mm. For example, the diameter of the fluid outlet of the nozzle may be 0.6 mm, 0.61 mm, 0.62 mm, 0.63 mm, 0.64 mm, or 0.65 mm.

In this embodiment, the revolution speed of the second drive element 60 ranges from 3500 rpm to 4500 rpm, within which the calculated flow rate of the fluid pump chamber 11 per unit time may be guaranteed. According to the equation Q_{fluid pump chamber} = nv, Q_{fluid pump chamber} ranges from 542 ml/min to 693 ml/min, and the K value can be satisfied to range from 2.93 to 3.75. It is to be noted that existence of the frictional drag may cause a certain proportional relationship between the calculated flow rate of the fluid pump chamber 11 per unit time and the flow rate of the nozzle 80 per unit time, and the greater the K value is, the smaller the flow rate of the nozzle per unit time is, and the more liquid can be saved.

In this embodiment, the volume of the fluid storage unit 50 ranges from 50 ml to 200 ml. Within this range, the amount of the liquid stored in the fluid storage unit 50 is sufficient to meet the requirements for dental cleaning.

In this embodiment, the volume of the fluid storage unit 50 ranges from 50 ml to 90 ml. The volume of the fluid storage unit 50 is related to volume, and reducing the volume of the fluid storage unit 50 is advantageous to reduce the size of the holding shell 70.

In one implementation manner of this embodiment, the displacement unit 40 is the diaphragm. The edge of the diaphragm is attached onto the side wall of the housing 10 in the second direction, the end face of the diaphragm facing towards the first direction is enclosed by the side wall of the housing 10 in the first direction to form a volume-variable sealing space, which is the fluid pump chamber 11. The end face of the diaphragm facing towards the second direction is connected to the linkage unit 20, such that concave-convex deformation of the diaphragm may occur under the drive of the linkage unit 20, to change the volume of the fluid pump chamber 11, and to change the pressure inside the fluid pump chamber 11. Referring to FIG. 3, a description is made below by taking an example where the linkage unit 20 fits the connecting rod 30 with the eccentric wheel.

The eccentric wheel is positioned in the housing 10 and on the second direction opposite to the first direction of the diaphragm, where the eccentric wheel has a rotating shaft 21 deviating from its geometric center, and the eccentric wheel is configured to rotate around the rotating shaft 21. The rotating shaft 21 runs through the eccentric wheel and extends along the rotation axis of the eccentric wheel, and the rotation axis is parallel to and not coincident with the central axis of the eccentric wheel. The geometric center of the eccentric wheel is a central position, in a geometrical shape, of the eccentric wheel. Therefore, when rotating around the rotating shaft 21, the eccentric wheel performs an eccentric rotation.

The connecting rod 30 is positioned between the diaphragm and the eccentric wheel, where the first end of the connecting rod 30 is rotationally connected to the eccentric wheel, such that when the eccentric wheel rotates, the connecting rod 30 is driven to move to and fro along the direction perpendicular to the rotating shaft 21. The second end of the connecting rod 30 extends toward a direction deviating from the rotating shaft 21, i.e. the first direction and the second direction as shown in FIG. 3. The diaphragm moves to and fro along the first direction and the second direction. The first end of the connecting rod 30 may be used as a power input end, and driven by the eccentric wheel, the first end of the connecting rod 30 may rotate around a rotation center. The second end opposite to the first end may be used as a power output end, and the second end of the connecting rod 30 may perform the to-and-fro movement perpendicular to the rotating shaft 21.

The diaphragm is connected to the second end of the connecting rod 30 and extends into the fluid pump chamber 11. The diaphragm acts on the plane in the fluid pump chamber 11 and is parallel to the rotating shaft 21. During the to-and-fro movement of the connecting rod 30, the diaphragm recurrently increases and decreases the volume of the fluid pump chamber 11, such that the liquid in the fluid storage unit 50 of the oral cleaning appliance is pumped into the fluid pump chamber 11 through the fluid input channel 12, and the impingement fluid is supplied through the fluid output channel 13.

Specifically, a sealed space is jointly formed by the diaphragm, the side wall of the fluid pump chamber 11, the one-way valve of the fluid input channel 12, and the one-way valve of the fluid output channel 13. The concave-convex deformation of the diaphragm can change the volume of the sealed space, so the pressure inside the fluid pump chamber 11 also increases or decreases accordingly. When the pressure inside the fluid pump chamber 11 decreases, under the action of the negative pressure, the liquid is pumped from the fluid storage unit 50 into the fluid pump chamber 11 through the fluid input channel 12. When the pressure inside the fluid pump chamber 11 increases, the liquid is discharged from the fluid pump chamber 11 through the fluid output channel 13 to form the impingement fluid. The fluid pump chamber 11 needs to suck the liquid and then discharge it, so a noncontinuous pulse water jet is formed in the fluid output channel 13, and a water hammer pressure of the pulse water jet is greater than a stagnation pressure of a continuous pulse water jet. In principle, the pulse water jet can produce huge transient energy by means of a water hammer action, which can increase the impingement force of the water flow and thus can improve the cleaning effects. Furthermore, compared with a continuous water flow, the pulse water jet can save water consumption, so the volume of the fluid storage unit can be reduced, and the product size can be reduced.

On this basis, the distance between the two limit positions of the connecting rod 30 is within the range of 2.1 mm to 2.6 mm, which is enough for the diaphragm to effectively carry out the concave-convex deformation to meet the requirements for the changes of the pressure inside the fluid pump chamber 11. In this way, the space in the housing 10 for supporting the movement of the connecting rod 30 can be reduced accordingly, and the design size of the housing 10 is reduced, and the product size is reduced. Using the technical solutions of this embodiment, the rotation of the eccentric wheel drives the diaphragm to move to and fro through the second end of the connecting rod 30, such that the fluid output channel 13 forms the pulse water jet, and the liquid consumption can be saved while the impingement force is guaranteed, so the demands for the liquid consumption can be met by using a smaller-sized fluid storage unit. Furthermore, the distance between the two limit positions of the connecting rod 30 ranges from 2.1 mm to 2.6 mm. Based on such setting, the space in the housing 10 for supporting the movement of the connecting rod 30 can be reduced, and the size of the housing 10 is reduced.

In another implementation manner of this embodiment, the displacement unit 40 is the piston. Different from the previous embodiment, the movement mode of the diaphragm is the concave-convex deformation, the inner wall of the housing 10 positioned in the first direction of the diaphragm needs to be designed to a corresponding concave surface, and the movement mode of the piston is that it can slide along the inner wall of the housing 10 through the edge. That is, when the end face of the piston facing towards the first direction is a plane, the inner wall of the housing 10 may be designed to a plane. When the end face of the piston facing towards the first direction is a camber surface, the inner wall of the housing 10 may be designed to the corresponding concave surface. Compared with the diaphragm, the piston has stronger compression capacity, and is less prone to produce a gap. The end face of the piston facing towards the second direction is connected to the linkage unit 20, and movement principles of the piston are the same as those of the diaphragm, and thus a detailed description thereof is omitted here.

Although embodiments of the present disclosure are described in conjunction with the attached drawings, various modifications and variations may be made by persons skilled in the art without deviating from the scope of the invention as determined by the appended claims.

## Claims

1. An oral cleaning appliance, comprising:
a holding shell (70), an end of the holding shell (70) being connected to a nozzle (80) and a brush head (90);
a fluid storage unit (50) arranged in the holding shell (70);
a fluid pumping unit arranged in the holding shell (70), the fluid pumping unit comprising:
a housing (10), a fluid pump chamber (11) being formed in the housing (10), and a fluid input channel (12) and a fluid output channel (13) communicated with the fluid pump chamber (11), the nozzle (80) being communicated with the fluid output channel (13), a water outlet of the fluid storage unit (50) being communicated with the fluid input channel (12);
a displacement unit (40) movably arranged in the housing (10), wherein an end face of the displacement unit (40) facing towards a first direction is enclosed by an inner wall of the housing (10) to form the fluid pump chamber (11) with a variable volume;
a linkage unit (20) arranged in the housing (10) and in transmission connection with an end face of the displacement unit (40) facing towards a second direction, wherein the linkage unit (20) is configured to drive the displacement unit (40) to move to and fro along the first direction and the second direction, to recurrently increase and decrease the volume of the fluid pump chamber (11), such that a liquid in the fluid storage unit (50) is pumped into the fluid pump chamber (11) through the fluid input channel (12), and an impingement fluid is supplied through the fluid output channel (13); and
a drive unit comprising a first drive member (73) arranged in the holding shell (70) and a second drive member (60), wherein the first drive member (73) is configured to drive the brush head (90) to swing left and right to clean a tooth, and the second drive member is in transmission connection with the linkage unit (20), and is configured to drive the linkage unit (20) to drive the displacement unit (40) to move to and fro;
wherein the displacement unit (40) has two limit positions during the to-and-fro movement along the first direction and the second direction, and a distance between the two limit positions ranges from 2.1 mm to 2.6 mm; and
a volume of the fluid pump chamber (11) ranges from 120 mm³ to 165 mm³.

2. The oral cleaning appliance according to claim 1, wherein a top of the holding shell (70) is connected to a rinsing handle (71), the brush head (90) is mounted at an end of the rinsing handle (71), the rinsing handle (71) is internally provided with a fluid channel (711), the nozzle (80) is mounted at the end of the rinsing handle (71) and is communicated with the fluid output channel (13) through the fluid channel (711); the first drive member (73) has a power output shaft (72) extending out of the holding shell (70), and the rinsing handle (71) is connected to the power output shaft (72) and is controlled by the power output shaft (72) to perform a cleaning action.

3. The oral cleaning appliance according to claim 2, wherein the power output shaft (72) is a cylinder running through an upper end and a lower end of the first drive (73) and has an axial channel (721), and the axial channel (721) has an outlet (722) communicated with the fluid channel (711) and an inlet (723) communicated with the fluid output channel (13).

4. The oral cleaning appliance according to claim 3, wherein a connector (74) is provided between the inlet (723) and the fluid output channel (13), the connector (74) has a communication cavity (741), a first end (742) facing towards the fluid output channel (13) and a second end (743) facing towards the inlet (723), and the fluid output channel (13) extends into the first end (742) of the connector (74), and the inlet (723) extends into the second end (743) of the connector (74).

5. The oral cleaning appliance according to claim 2, wherein the end of the rinsing handle (71) has a mounting groove (75), the mounting groove (75) has a lug boss (751), the lug boss (751) has a liquid outlet of the fluid channel, and the nozzle (80) is mounted on the lug boss (751); the brush head (90) comprises a contact element carrier (901) mounted in the mounting groove (75), and a plurality of contact element clusters (902) spaced on the contact element carrier (901), the contact element carrier (901) is provided with a hole (903) fitting in shape to the nozzle (80), or the nozzle (80) and the brush head (90) are integrally formed and mounted on the mounting groove (75).

6. The oral cleaning appliance according to claim 1, wherein the linkage unit (20) comprises:
an eccentric wheel positioned in the housing (10) and on the second direction opposite to the first direction of the displacement unit (40), wherein the eccentric wheel has a rotating shaft (21) deviating from its geometric center, the rotating shaft (21) runs through the eccentric wheel and extends along a rotation axis of the eccentric wheel, the rotation axis is parallel to and not coincident with a central axis of the eccentric wheel; a connecting rod (30) positioned between the displacement unit (40) and the eccentric wheel, wherein a first end of the connecting rod (30) is rotationally connected to the eccentric wheel, such that when the eccentric wheel rotates, the connecting rod (30) is driven to move to and fro along a direction perpendicular to the rotating shaft (21); a second end of the connecting rod (30) extends toward a direction of the displacement unit (40) and is connected to the end face of the displacement unit (40) facing towards the second direction, during the to-and-fro movement of the connecting rod (30), the displacement unit (40) is driven to recurrently increase and decrease, with a same stroke as the connecting rod (30), the volume of the fluid pump chamber (11), such that water in the fluid storage unit (50) is pumped into the fluid pump chamber (11) through the fluid input channel (12), and the impingement fluid is supplied through the fluid output channel (13); wherein the second end of the connecting rod (30) has two limit positions close to the rotating shaft (21) or far away from the rotating shaft (21) during the to-and-fro movement, and the distance between the two limit positions ranges from 2.1 mm to 2.6 mm.

7. The oral cleaning appliance according to claim 6, wherein the second drive member (60) is a brushless motor arranged in the holding shell (70), the rotating shaft (21) is an output shaft of the brushless motor, and a revolution speed of the brushless motor ranges from 3500 rpm to 4500 rpm.

8. The oral cleaning appliance according to claim 6, wherein the first end of the connecting rod (30) is coincident with the geometric center of the eccentric wheel with respect to a rotation center of the eccentric wheel, and an eccentric distance of the eccentric wheel ranges from 1.05 mm to 1.3 mm.

9. The oral cleaning appliance according to claim 8, wherein the eccentric wheel is connected to a balance block (23), the balance block (23) is configured to increase weight of the rotating shaft (21) of the eccentric wheel to balance a torque of the eccentric wheel during rotation.

10. The oral cleaning appliance according to claim 1, wherein the second drive member (60) is a linear motor arranged in the holding shell (70), and the linkage unit (20) is an output shaft of the linear motor, and a stroke of the output shaft ranges from 2.1 mm to 2.6 mm.

11. The oral cleaning appliance according to any one of claims 1 to 10, wherein the displacement unit (40) has two limit positions during a to-and-fro movement along the first direction and the second direction, and the distance between the two limit positions ranges from 2.2 mm to 2.4 mm.

12. The oral cleaning appliance according to claim 11, wherein the volume of the fluid pump chamber (11) ranges from 120 mm³ to 130 mm³, and the distance between the two limit positions of the displacement unit (40) during the to-and-fro movement is 2.2 mm.

13. The oral cleaning appliance according to claim 11, wherein the volume of the fluid pump chamber (11) ranges from 155 mm³ to 165 mm³, and the distance between the two limit positions of the displacement unit (40) during the to-and-fro movement is 2.4 mm.

14. The oral cleaning appliance according to any one of claims 1 to 10, wherein an internal diameter of the fluid input channel (12) ranges from 2.0 mm to 3.0 mm.

15. The oral cleaning appliance according to any one of claims 1 to 10, wherein a ratio of a calculated flow rate of the fluid pump chamber (11) per unit time to an actual flow rate of the fluid output channel (13) per unit time satisfies a following equation:K = Q_{fluid pump chamber}/ Q_{fluid pump chamber}
wherein K represents the ratio of the calculated flow rate of the fluid pump chamber per unit time to the actual flow rate of the fluid output channel (13) per unit time, and K is in a range of 2.93≤K≤3.75, Q_{fluid pump chamber} represents the calculated flow rate of the fluid pump chamber (11) per unit time, and Q_{fluid pump chamber} represents the actual flow rate of the fluid output channel (13) per unit time.

16. The oral cleaning appliance according to claim 15, wherein the volume of the fluid storage unit (50) ranges from 50 ml to 90 ml.

## Patentansprüche

1. Eine Mundreinigungsvorrichtung, umfassend:
eine Halteschale (70), wobei ein Ende der Halteschale (70) mit einer Düse (80) und einem Bürstenkopf (90) verbunden ist;
eine Flüssigkeitsspeichereinheit (50), die in der Halteschale (70) angeordnet ist;
eine Flüssigkeitspumpeinheit, die in der Halteschale (70) angeordnet ist, wobei die Flüssigkeitspumpeinheit umfasst: ein Gehäuse (10), eine Flüssigkeitspumpkammer (11), die in dem Gehäuse (10) ausgebildet ist, und einen Flüssigkeitseinlasskanal (12) und einen Flüssigkeitsauslasskanal (13), die mit der Flüssigkeitspumpkammer (11) in Verbindung stehen, wobei die Düse (80) mit dem Flüssigkeitsauslasskanal (13) in Verbindung steht und ein Wasserauslass der Flüssigkeitsspeichereinheit (50) mit dem Flüssigkeitseinlasskanal (12) in Verbindung steht;
eine Verdrängungseinheit (40), die beweglich in dem Gehäuse (10) angeordnet ist, wobei eine in eine erste Richtung gewandte Stirnfläche der Verdrängungseinheit (40) von einer Innenwand des Gehäuses (10) umschlossen ist, um die Flüssigkeitspumpkammer (11) mit einem variablen Volumen zu bilden;
eine Kopplungseinheit (20), die in dem Gehäuse (10) angeordnet ist und in Getriebeverbindung mit einer in eine zweite Richtung gewandten Stirnfläche der Verdrängungseinheit (40) steht, wobei die Kopplungseinheit (20) dazu konfiguriert ist, die Verdrängungseinheit (40) so anzutreiben, dass sie sich entlang der ersten Richtung und der zweiten Richtung hin und her bewegt, um das Volumen der Flüssigkeitspumpkammer (11) periodisch zu vergrößern und zu verkleinern, sodass eine Flüssigkeit in der Flüssigkeitsspeichereinheit (50) durch den Flüssigkeitseinlasskanal (12) in die Flüssigkeitspumpkammer (11) gepumpt wird und eine Stoßflüssigkeit durch den Flüssigkeitsauslasskanal (13) bereitgestellt wird; und
eine Antriebseinheit, die ein erstes Antriebselement (73), das in der Halteschale (70) angeordnet ist, und ein zweites Antriebselement (60) umfasst, wobei das erste Antriebselement (73) dazu konfiguriert ist, den Bürstenkopf (90) so anzutreiben, dass er zur Reinigung eines Zahns nach links und rechts schwingt, und das zweite Antriebselement in Getriebeverbindung mit der Kopplungseinheit (20) steht und dazu konfiguriert ist, die Kopplungseinheit (20) so anzutreiben, dass sie die Verdrängungseinheit (40) zu einer Hin- und Herbewegung antreibt;
wobei die Verdrängungseinheit (40) während der Hin- und Herbewegung entlang der ersten Richtung und der zweiten Richtung zwei Grenzpositionen aufweist, und ein Abstand zwischen den zwei Grenzpositionen im Bereich von 2,1 mm bis 2,6 mm liegt; und
ein Volumen der Flüssigkeitspumpkammer (11) im Bereich von 120 mm³ bis 165 mm³ liegt.

2. Die Mundreinigungsvorrichtung gemaß Anspruch 1, wobei eine Oberseite der Halteschale (70) mit einem Spülgriff (71) verbunden ist, der Bürstenkopf (90) an einem Ende des Spülgriffs (71) montiert ist, der Spülgriff (71) im Inneren mit einem Flüssigkeitskanal (711) versehen ist, die Düse (80) an dem Ende des Spülgriffs (71) montiert ist und mit dem Flüssigkeitsauslasskanal (13) durch den Flüssigkeitskanal (711) in Verbindung steht; wobei das erste Antriebselement (73) eine Abtriebswelle (72) aufweist, die aus der Halteschale (70) herausragt, und der Spülgriff (71) mit der Abtriebswelle (72) verbunden ist und von der Abtriebswelle (72) gesteuert wird, um einen Reinigungsvorgang auszuführen.

3. Die Mundreinigungsvorrichtung gemaß Anspruch 2, wobei die Abtriebswelle (72) ein Zylinder ist, der durch ein oberes Ende und un ein unteres Ende des ersten Antriebselements (73) verläuft und einen axialen Kanal (721) aufweist, und wobei der axiale Kanal (721) einen Auslass (722), der mit dem Flüssigkeitskanal (711) in Verbindung steht, und einen Einlass (723) aufweist, der mit dem Flüssigkeitsauslasskanal (13) in Verbindung steht.

4. Die Mundreinigungsvorrichtung gemaß Anspruch 3, wobei ein Verbindungsstück (74) zwischen dem Einlass (723) und dem Flüssigkeitsauslasskanal (13) vorgesehen ist, wobei das Verbindungsstück (74) einen Durchgangshohlraum (741), ein dem Flüssigkeitsauslasskanal (13) zugewandtes erstes Ende (742) und ein dem Einlass (723) zugewandtes zweites Ende (743) aufweist, und wobei der Flüssigkeitsauslasskanal (13) in das erste Ende (742) des Verbindungsstücks (74) hineinragt und der Einlass (723) in das zweite Ende (743) des Verbindungsstücks (74) hineinragt.

5. Die Mundreinigungsvorrichtung gemaß Anspruch 2, wobei das Ende des Spülgriffs (71) eine Montagenut (75) aufweist, wobei die Montagenut (75) einen Ansatz (751) aufweist, wobei der Ansatz (751) einen Flüssigkeitsauslass des Flüssigkeitskanals aufweist und die Düse (80) an dem Ansatz (751) montiert ist; wobei der Bürstenkopf (90) einen Kontaktélémentträger (901), der in der Montagenut (75) montiert ist, und eine Vielzahl von Kontaktelementbündeln (902) umfasst, die beabstandet auf dem Kontaktélémentträger (901) angeordnet sind, wobei der Kontaktélémentträger (901) mit einem Loch (903) versehen ist, das in seiner Form an die Düse (80) angepasst ist, oder wobei die Düse (80) und der Bürstenkopf (90) einstückig ausgebildet und an der Montagenut (75) montiert sind.

6. Die Mundreinigungsvorrichtung gemaß Anspruch 1, wobei die Kopplungseinheit (20) umfasst:
ein Exzenterrad, das in dem Gehäuse (10) und in der der ersten Richtung der Verdrängungseinheit (40) entgegengesetzten zweiten Richtung positioniert ist, wobei das Exzenterrad eine von seinem geometrischen Zentrum abweichende Drehwelle (21) aufweist, wobei die Drehwelle (21) durch das Exzenterrad verläuft und sich entlang einer Rotationsachse des Exzenterrads erstreckt, wobei die Rotationsachse parallel zu einer Mittelachse des Exzenterrads verläuft und nicht mit dieser zusammenfällt;
eine Verbindungsstange (30), die zwischen der Verdrängungseinheit (40) und dem Exzenterrad positioniert ist, wobei ein erstes Ende der Verbindungsstange (30) drehbar mit dem Exzenterrad verbunden ist, sodass bei einer Drehung des Exzenterrads die Verbindungsstange (30) so angetrieben wird, dass sie sich entlang einer zur Drehwelle (21) senkrechten Richtung hin und her bewegt;
wobei sich ein zweites Ende der Verbindungsstange (30) in eine Richtung der Verdrängungseinheit (40) erstreckt und mit der in die zweite Richtung gewandten Stirnfläche der Verdrängungseinheit (40) verbunden ist, wobei während der Hin- und Herbewegung der Verbindungsstange (30) die Verdrängungseinheit (40) so angetrieben wird, dass sie das Volumen der Flüssigkeitspumpkammer (11) mit demselben Hub wie die Verbindungsstange (30) periodisch vergrößert und verkleinert, sodass Wasser in der Flüssigkeitsspeichereinheit (50) durch den Flüssigkeitseinlasskanal (12) in die Flüssigkeitspumpkammer (11) gepumpt wird und die Stoßflüssigkeit durch den Flüssigkeitsauslasskanal (13) bereitgestellt wird;
wobei das zweite Ende der Verbindungsstange (30) während der Hin- und Herbewegung zwei Grenzpositionen nahe der Drehwelle (21) oder fern von der Drehwelle (21) aufweist, und der Abstand zwischen den zwei Grenzpositionen im Bereich von 2,1 mm bis 2,6 mm liegt.

7. Die Mundreinigungsvorrichtung gemaß Anspruch 6, wobei das zweite Antriebselement (60) ein bürstenloser Motor ist, der in der Halteschale (70) angeordnet ist, wobei die Drehwelle (21) eine Abtriebswelle des bürstenlosen Motors ist und eine Drehzahl des bürstenlosen Motors im Bereich von 3500 U/min bis 4500 U/min liegt.

8. Die Mundreinigungsvorrichtung gemaß Anspruch 6, wobei das erste Ende der Verbindungsstange (30) in Bezug auf ein Rotationszentrum des Exzenterrads mit dem geometrischen Zentrum des Exzenterrads zusammenfällt, und wobei ein Exzentrizitätsabstand des Exzenterrads im Bereich von 1,05 mm bis 1,3 mm liegt.

9. Die Mundreinigungsvorrichtung gemaß Anspruch 8, wobei das Exzenterrad mit einem Ausgleichsgewicht (23) verbunden ist, wobei das Ausgleichsgewicht (23) dazu konfiguriert ist, das Gewicht der Drehwelle (21) des Exzenterrads zu erhöhen, um ein Drehmoment des Exzenterrads während der Drehung auszugleichen.

10. Die Mundreinigungsvorrichtung gemaß Anspruch 1, wobei das zweite Antriebselement (60) ein Linearmotor ist, der in der Halteschale (70) angeordnet ist, und die Kopplungseinheit (20) eine Abtriebswelle des Linearmotors ist, und wobei ein Hub der Abtriebswelle im Bereich von 2,1 mm bis 2,6 mm liegt.

11. Die Mundreinigungsvorrichtung gemäß einem der Ansprüche 1 bis 10, wobei die Verdrängungseinheit (40) während einer Hin- und Herbewegung entlang der ersten Richtung und der zweiten Richtung zwei Grenzpositionen aufweist, und der Abstand zwischen den zwei Grenzpositionen im Bereich von 2,2 mm bis 2,4 mm liegt.

12. Die Mundreinigungsvorrichtung gemäß Anspruch 11, wobei das Volumen der Flüssigkeitspumpkammer (11) im Bereich von 120 mm³ bis 130 mm³ liegt und der Abstand zwischen den zwei Grenzpositionen der Verdrängungseinheit (40) während der Hin- und Herbewegung 2,2 mm beträgt.

13. Die Mundreinigungsvorrichtung gemäß Anspruch 11, wobei das Volumen der Flüssigkeitspumpkammer (11) im Bereich von 155 mm³ bis 165 mm³ liegt und der Abstand zwischen den zwei Grenzpositionen der Verdrängungseinheit (40) während der Hin- und Herbewegung 2,4 mm beträgt.

14. Die Mundreinigungsvorrichtung gemäß einem der Ansprüche 1 bis 10, wobei ein Innendurchmesser des Flüssigkeitseinlasskanals (12) im Bereich von 2,0 mm bis 3,0 mm liegt.

15. Die Mundreinigungsvorrichtung gemäß einem der Ansprüche 1 bis 10, wobei ein Verhältnis einer berechneten Durchflussrate der Flüssigkeitspumpkammer (11) pro Zeiteinheit zu einer tatsächlichen Durchflussrate des Flüssigkeitsauslasskanals (13) pro Zeiteinheit folgende Gleichung erfüllt: K = Q_{Flüssigkeitspumpkammer (berechnete Durchflussrate)} / Q_{Flüssigkeitspumpkammer (tatsächliche Durchflussrate)}
wobei K das Verhältnis der berechneten Durchflussrate der Flüssigkeitspumpkammer pro Zeiteinheit zur tatsächlichen Durchflussrate des Flüssigkeitsauslasskanals (13) pro Zeiteinheit darstellt und K in einem Bereich von 2,93 < K < 3,75 liegt, Q_{Flüssigkeitspumpkammer (berechnete Durchflussrate)} die berechnete Durchflussrate der Flüssigkeitspumpkammer (11) pro Zeiteinheit darstellt und QFlüssigkeitspumpkammer (tatsächliche Durchflussrate) die tatsächliche Durchflussrate des Flüssigkeitsauslasskanals (13) pro Zeiteinheit darstellt.

16. Die Mundreinigungsvorrichtung gemäß Anspruch 15, wobei das Volumen der Flüssigkeitsspeichereinheit (50) im Bereich von 50 ml bis 90 ml liegt.

## Revendications

1. Un appareil de nettoyage buccal, comprenant :
une coque de maintien (70), une extrémité de la coque de maintien (70) étant reliée à une buse (80) et à une tête de brosse (90) ;
une unité de stockage de fluide (50) disposée dans la coque de maintien (70) ;
une unité de pompage de fluide disposée dans la coque de maintien (70), l'unité de pompage de fluide comprenant :
un boîtier (10), dans lequel est formée une chambre de pompe à fluide (11), ainsi qu'un canal d'entrée de fluide (12) et un canal de sortie de fluide (13) communiquant avec la chambre de pompe à fluide (11), la buse (80) communiquant avec le canal de sortie de fluide (13), et une sortie d'eau de l'unité de stockage de fluide (50) communiquant avec le canal d'entrée de fluide (12) ;
une unité de déplacement (40) disposée de manière mobile dans le boîtier (10), dans laquelle une face d'extrémité de l'unité de déplacement (40) orientée vers une première direction est entourée par une paroi interne du boîtier (10) pour former la chambre de pompe à fluide (11) à volume variable ;
une unité de couplage (20) disposée dans le boîtier (10) et en liaison de transmission con une face d'extrémité de l'unité de déplacement (40) orientée vers une seconde direction, dans laquelle l'unité de couplage (20) est configurée pour entraîner l'unité de déplacement (40) en un mouvement de va-et-vient le long de la première direction et de la seconde direction, afin d'augmenter et de diminuer de manière récurrente le volume de la chambre de pompe à fluide (11), de sorte qu'un liquide dans l'unité de stockage de fluide (50) soit pompé dans la chambre de pompe à fluide (11) à travers le canal d'entrée de fluide (12), et qu'un fluide d'impulsion soit fourni à travers le canal de sortie de fluide (13) ; et
une unité d'entraînement comprenant un premier élément d'entraînement (73) disposé dans la coque de maintien (70) et un second élément d'entraînement (60), dans laquelle le premier élément d'entraînement (73) est configuré para entraîner la tête de brosse (90) en une oscillation vers la gauche et vers la droite pour nettoyer une dent, et le second élément d'entraînement est en liaison de transmission avec l'unité de couplage (20) et est configuré pour entraîner l'unité de couplage (20) afin d'entraîner l'unité de déplacement (40) en un mouvement de va-et-vient ;
dans lequel l'unité de déplacement (40) présente deux positions limites pendant le mouvement de va-et-vient le long de la première direction et de la seconde direction, et une distance entre les deux positions limites est comprise dans une plage de 2,1 mm à 2,6 mm ;
et dans lequel un volume de la chambre de pompe à fluide (11) est compris dans une plage de 120 mm³ à 165 mm³.

2. L'appareil de nettoyage buccal selon la revendication 1, dans lequel une partie supérieure de la coque de maintien (70) est reliée à un manche de rinçage (71), la tête de brosse (90) est montée à une extrémité du manche de rinçage (71), le manche de rinçage (71) est pourvu intérieurement d'un canal de fluide (711), la buse (80) est montée à l'extrémité du manche de rinçage (71) et communique avec le canal de sortie de fluide (13) à travers le canal de fluide (711) ; le premier élément d'entraînement (73) présente un arbre de sortie de puissance (72) s'étendant hors de la coque de maintien (70), et le manche de rinçage (71) est relié à l'arbre de sortie de puissance (72) et est commandé par l'arbre de sortie de puissance (72) pour effectuer une action de nettoyage.

3. L'appareil de nettoyage buccal selon la revendication 2, dans lequel l'arbre de sortie de puissance (72) est un cylindre traversant une extrémité supérieure et une extrémité inférieure du premier élément d'entraînement (73) et présente un canal axial (721), et le canal axial (721) présente une sortie (722) communiquant avec le canal de fluide (711) et une entrée (723) communiquant avec le canal de sortie de fluide (13).

4. L'appareil de nettoyage buccal selon la revendication 3, dans lequel un raccord (74) est prévu entre l'entrée (723) et le canal de sortie de fluide (13), le raccord (74) présente une cavité de communication (741), une première extrémité (742) orientée vers le canal de sortie de fluide (13) et une seconde extrémité (743) orientée vers l'entrée (723), et le canal de sortie de fluide (13) s'étend dans la première extrémité (742) du raccord (74), et l'entrée (723) s'étend dans la seconde extrémité (743) du raccord (74).

5. L'appareil de nettoyage buccal selon la revendication 2, dans lequel l'extrémité du manche de rinçage (71) présente une rainure de montage (75), la rainure de montage (75) présente un bossage (751), le bossage (751) présente une sortie de liquide du canal de fluide, et la buse (80) est montée sur le bossage (751) ; la tête de brosse (90) comprend un support d'éléments de contact (901) monté dans la rainure de montage (75), et une pluralité de touffes d'éléments de contact (902) espacées sur le support d'éléments de contact (901), le support d'éléments de contact (901) étant pourvu d'un trou (903) dont la forme s'adapte à celle de la buse (80), ou bien la buse (80) et la tête de brosse (90) étant formées de manière intégrale et montées sur la rainure de montage (75).

6. L'appareil de nettoyage buccal selon la revendication 1, dans lequel l'unité de couplage (20) comprend :
une roue excentrique positionnée dans le boîtier (10) et dans la seconde direction opposée à la première direction de l'unité de déplacement (40), dans laquelle la roue excentrique présente un arbre rotatif (21) s'écartant de son centre géométrique, l'arbre rotatif (21) traversant la roue excentrique et s'étendant le long d'un axe de rotation de la roue excentrique, l'axe de rotation étant parallèle à un axe central de la roue excentrique sans coïncider avec celle-ci ;
une bielle (30) positionnée entre l'unité de déplacement (40) et la roue excentrique, dans laquelle une première extrémité de la bielle (30) est reliée de manière rotative à la roue excentrique, de sorte que, lorsque la roue excentrique tourne, la bielle (30) est entraînée en un mouvement de va-et-vient le long d'une direction perpendiculaire à l'arbre rotatif (21) ; une seconde extrémité de la bielle (30) s'étendant vers une direction de l'unité de déplacement (40) et étant reliée à la face d'extrémité de l'unité de déplacement (40) orientée vers la seconde direction, l'unité de déplacement (40) étant entraînée, pendant le mouvement de va-et-vient de la bielle (30), pour augmenter et diminuer de manière récurrente le volume de la chambre de pompe à fluide (11) avec une course identique à celle de la bielle (30), de sorte que de l'eau dans l'unité de stockage de fluide (50) soit pompée dans la chambre de pompe à fluide (11) à travers le canal d'entrée de fluide (12), et que le fluide d'impulsion soit fourni à travers le canal de sortie de fluide (13) ;
dans lequel la seconde extrémité de la bielle (30) présente deux positions limites, proche de l'arbre rotatif (21) ou éloignée de l'arbre rotatif (21), pendant le mouvement de va-et-vient, et la distance entre les deux positions limites est comprise dans une plage de 2,1 mm à 2,6 mm.

7. L'appareil de nettoyage buccal selon la revendication 6, dans lequel le second élément d'entraînement (60) est un moteur sans balais disposé dans la coque de maintien (70), l'arbre rotatif (21) est un arbre de sortie du moteur sans balais, et une vitesse de rotation du moteur sans balais est comprise dans une plage de 3 500 tr/min à 4 500 tr/min.

8. L'appareil de nettoyage buccal selon la revendication 6, dans lequel la première extrémité de la bielle (30) coïncide avec le centre géométrique de la roue excentrique par rapport à un centre de rotation de la roue excentrique, et une distance d'excentricité de la roue excentrique est comprise dans une plage de 1,05 mm à 1,3 mm.

9. L'appareil de nettoyage buccal selon la revendication 8, dans lequel la roue excentrique est reliée à un contrepoids (23), le contrepoids (23) étant configuré pour augmenter le poids de l'arbre rotatif (21) de la roue excentrique afin d'équilibrer un couple de la roue excentrique pendant la rotation.

10. L'appareil de nettoyage buccal selon la revendication 1, dans lequel le second élément d'entraînement (60) est un moteur linéaire disposé dans la coque de maintien (70), et l'unité de couplage (20) est un arbre de sortie du moteur linéaire, et une course de l'arbre de sortie est comprise dans une plage de 2,1 mm à 2,6 mm.

11. L'appareil de nettoyage buccal selon l'une quelconque des revendications 1 à 10, dans lequel l'unité de déplacement (40) présente deux positions limites pendant un mouvement de va-et-vient le long de la première direction et de la seconde direction, et la distance entre les deux positions limites est comprise dans une plage de 2,2 mm à 2,4 mm.

12. L'appareil de nettoyage buccal selon la revendication 11, dans lequel le volume de la chambre de pompe à fluide (11) est compris dans une plage de 120 mm³ à 130 mm³, et la distance entre les deux positions limites de l'unité de déplacement (40) pendant le mouvement de va-et-vient est de 2,2 mm.

13. L'appareil de nettoyage buccal selon la revendication 11, dans lequel le volume de la chambre de pompe à fluide (11) est compris dans une plage de 155 mm³ à 165 mm³, et la distance entre les deux positions limites de l'unité de déplacement (40) pendant le mouvement de va-et-vient est de 2,4 mm.

14. L'appareil de nettoyage buccal selon l'une quelconque des revendications 1 à 10, dans lequel un diamètre intérieur du canal d'entrée de fluide (12) est compris dans une plage de 2,0 mm à 3,0 mm.

15. L'appareil de nettoyage buccal selon l'une quelconque des revendications 1 à 10, dans lequel un rapport d'un débit calculé de la chambre de pompe à fluide (11) par unité de temps sur un débit réel du canal de sortie de fluide (13) par unité de temps satisfait à l'équation suivante : Q_{chambre de pompe à fluide (calculé)} / Q_{chambre de pompe à fluide (réel)}
dans lequel K représente le rapport du débit calculé de la chambre de pompe à fluide par unité de temps sur le débit réel du canal de sortie de fluide (13) par unité de temps, et K est compris dans une plage de $2,93 < K < 3,75$, Q_{chambre de pompe à fluide (calculé)} représente le débit calculé de la chambre de pompe à fluide (11) par unité de temps, et Q_{chambre de pompe à fluide (réel)} représente le débit réel du canal de sortie de fluide (13) par unité de temps.

16. L'appareil de nettoyage buccal selon la revendication 15, dans lequel le volume de l'unité de stockage de fluide (50) est compris dans une plage de 50 ml à 90 ml.
